# EUROPEAN PATENT APPLICATION

(11) **EP 4 598 254 A1**
(43) Date of publication of application: **06.08.2025**
(21) Application number: 23870433.2
(22) Date of filing: 18.09.2023
(51) Int. Cl.: H04W 76/14, H04W 72/04, H04W 72/25

(54) **RESOURCE COORDINATION METHOD AND APPARATUS, AND STORAGE MEDIUM**

(30) Priority: 29.09.2022 CN 202211204620
(71) Applicant: Datang Mobile Communications Equipment Co., Ltd., Beijing 100085 (CN)
(72) Inventor: REN, Xiaotao, Beijing 100085 (CN); REN, Bin, Beijing 100085 (CN)
(74) Representative: Studio Torta S.p.A.
(86) International application number: PCT/CN2023/119379
(87) International publication number: WO 2024/067199

(57) **Abstract**

Provided in the embodiments of the present disclosure are a resource coordination method and apparatus, and a storage medium. The resource coordination method is applied to a first terminal. The method comprises: sending first coordination information to a second terminal, wherein the first coordination information comprises one or more pieces of the following information: type indication information of the first coordination information; first content indication information of the first coordination information; second content indication information of the first coordination information; a first resource set; a second resource set; a third resource set; a fourth resource set; indication information for a set of resources, which are occupied by a sidelink positioning reference signal (SL-PRS); SL-PRS reference signal receiving power (RSRP) information; priority information; and region identifier information.

## Description

### CROSS-REFERENCES TO RELATED APPLICATIONS

The present application claims priority to Chinese Patent Application No. 202211204620.8 filed on September 29, 2022, entitled "Resource Coordination Method and Apparatus, and Storage Medium", which is hereby incorporated by reference in its entirety.

### FIELD

The present application relates to the field of communications, and in particular, to methods and apparatuses for resource coordination, and a storage medium.

### BACKGROUND

Considering relative positioning between terminals, a sidelink positioning reference signal (SL-PRS) transmitted between terminals is introduced, allowing terminals to complete a relative positioning procedure between terminals directly in the sidelink without relying on a base station.

To improve positioning accuracy, a terminal often uses relatively large SL-PRS transmission bandwidth in case of transmitting SL-PRS, which means that each SL-PRS occupies more time-frequency resources, increasing the collision probability and severity of SL-PRSs transmitted between multiple terminals. If the time-frequency resources used by multiple terminals to transmit SL-PRS collide, it causes serious mutual interference of SL-PRSs between terminals, which reduces the positioning accuracy of sidelink, and even is unable to position.

### BRIEF SUMMARY

The embodiments of the present application provide methods and apparatuses for resource coordination, and a storage medium to solve a problem of low positioning accuracy or even inability to locate through sidelinks in the related art.

The embodiments of the present application provide a method for resource coordination, performed by a first terminal, including:
transmitting first coordination information to a second terminal, where the first coordination information includes one or more types of the following information:
type indication information of the first coordination information;
first content indication information of the first coordination information;
second content indication information of the first coordination information;
a first resource set;
a second resource set;
a third resource set;
a fourth resource set;
indication information of a resource set occupied by a sidelink positioning reference signal (SL-PRS);
information of sidelink positioning reference signal (SL-PRS) reference signal received power (RSRP);
priority information; or
zone identifier information.

In some embodiments, a value of the type indication information is a first value, indicating that the first terminal provides coordination information to the second terminal; or
a value of the type indication information is a second value, indicating that the first terminal requests coordination information from the second terminal.

In some embodiments, a value of the first content indication information is a first value, indicating that the first terminal provides the first resource set to the second terminal, where the first resource set includes a resource preferred by the second terminal for transmitting or receiving SL-PRS; or
a value of the first content indication information is a second value, indicating that the first terminal provides the second resource set to the second terminal, where the second resource set includes a resource not preferred by the second terminal for transmitting or receiving SL-PRS.

In some embodiments, the first resource set or the second resource set includes one or more types of the following information:
a slot set of an SL-PRS resource;
a subchannel set of an SL-PRS resource;
a resource reservation cycle of SL-PRS;
a resource reservation cycle list of SL-PRS;
a reference slot location of an SL-PRS resource; or
a resource combination corresponding to SL-PRS resource.

In some embodiments, the reference slot location of SL-PRS resource is a reference slot location used in case of determining an absolute slot location of the slot set of SL-PRS resource in a direct frame number (DFN).

In some embodiments, the reference slot location of SL-PRS resource is indicated by one or more types of the following indexes:
a DFN index; or
a slot index within a direct frame.

In some embodiments, the resource combination corresponding to SL-PRS resource includes one or more types of the following information:
a time resource indication index;
a frequency resource indication index; or
a resource reservation cycle.

In some embodiments, a value of the second content indication information is a first value, indicating that the first terminal requests a third resource set from the second terminal, where the third resource set includes a resource preferred by the first terminal for transmitting or receiving SL-PRS; or
a value of the second content indication information is a second value, indicating that the first terminal requests a fourth resource set from the second terminal, where the fourth resource set includes a resource not preferred by the first terminal for transmitting or receiving SL-PRS.

In some embodiments, the third resource set or the fourth resource set includes one or more types of the following information:
a quantity of subchannels occupied by SL-PRS;
a resource reservation cycle of SL-PRS;
a resource reservation cycle list of SL-PRS;
a location of a resource selection window of SL-PRS; or
a location of a subchannel selection window of SL-PRS.

In some embodiments, the information of SL-PRS RSRP includes one or more types of the following information:
information of SL-PRS RSRP of at least one resource in at least one resource set; or
information of SL-PRS RSRPs of resources meeting a given condition in at least one resource set.

In some embodiments, the information of SL-PRS RSRP includes one or more types of the following information:
intensity information of SL-PRS RSRP; or
bitmap information of SL-PRS RSRP, where the bitmap information is used to indicate whether multiple SL-PRS RSRPs exceed a target threshold.

In some embodiments, the intensity information of SL-PRS RSRP is intensity information of SL-PRS RSRP of a subchannel or a subchannel set.

In some embodiments, the information of SL-PRS RSRPs of resources meeting the given condition in at least one resource set includes one or more types of the following information:
intensity information of SL-PRS RSRPs of top N resources after ordering SL-PRS RSRP intensities from high to low in at least one resource set;
intensity information of SL-PRS RSRPs of top M resources after ordering SL-PRS RSRP intensities from low to high in at least one resource set;
bitmap information of SL-PRS RSRPs of resources with SL-PRS RSRP intensities greater than a target threshold in at least one resource set;
bitmap information of SL-PRS RSRPs of resources with SL-PRS RSRP intensities equal to a target threshold in at least one resource set;
bitmap information of SL-PRS RSRPs of resources with SL-PRS RSRP intensities lower than a target threshold in at least one resource set; or
bitmap information of SL-PRS RSRPs of resources with SL-PRS RSRP intensities equal to a target threshold in at least one resource set.

In some embodiments, the at least one resource set includes one or more types of the following sets:
the first resource set, where the first resource set includes a resource preferred by the second terminal for transmitting or receiving SL-PRS;
the second resource set, where the second resource set includes a resource not preferred by the second terminal for transmitting or receiving SL-PRS;
the third resource set, where the third resource set includes a resource preferred by the first terminal for transmitting or receiving SL-PRS; or
the fourth resource set, where the fourth resource set includes a resource not preferred by the first terminal for transmitting or receiving SL-PRS

In some embodiments, the target threshold is indicated in one or more of the following ways:
the target threshold being carried through the first coordination information;
the target threshold being configured through dedicated signaling;
the target threshold being pre-configured; or
the target threshold being determined based on a correspondence between a priority of the first coordination information and a threshold.

In some embodiments, the first coordination information is carried by one or more of the following messages:
sidelink control information (SCI);
downlink control information (DCI); or
radio resource control (RRC) signaling.

Embodiments of the present application provide a method for resource coordination, performed by a second terminal, including:
receiving first coordination information transmitted from a first terminal, where the first coordination information includes one or more types of the following information:
type indication information of the first coordination information;
first content indication information of the first coordination information;
second content indication information of the first coordination information;
a first resource set;
a second resource set;
a third resource set;
a fourth resource set;
indication information of a resource set occupied by a sidelink positioning reference signal (SL-PRS);
information of sidelink positioning reference signal (SL-PRS) reference signal received power (RSRP);
priority information; or
zone identifier information.

Embodiments of the present application provide a first terminal, including a memory, a transceiver, and a processor, where
the memory is used for storing a computer program; the transceiver is used for receiving and transmitting data under control of the processor; and the processor is used for reading the computer program in the memory and performing the following operations:
transmitting first coordination information to a second terminal, where the first coordination information includes one or more types of the following information:
   type indication information of the first coordination information;
   first content indication information of the first coordination information;
   second content indication information of the first coordination information;
   a first resource set;
   a second resource set;
   a third resource set;
   a fourth resource set;
   indication information of a resource set occupied by a sidelink positioning reference signal (SL-PRS);
   information of sidelink positioning reference signal (SL-PRS) reference signal received power (RSRP);
   priority information; or
   zone identifier information.

In some embodiments, a value of the type indication information is a first value, indicating that the first terminal provides coordination information to the second terminal; or
a value of the type indication information is a second value, indicating that the first terminal requests coordination information from the second terminal.

In some embodiments, a value of the first content indication information is a first value, indicating that the first terminal provides the first resource set to the second terminal, where the first resource set includes a resource preferred by the second terminal for transmitting or receiving SL-PRS; or
a value of the first content indication information is a second value, indicating that the first terminal provides the second resource set to the second terminal, where the second resource set includes a resource not preferred by the second terminal for transmitting or receiving SL-PRS.

In some embodiments, the first resource set or the second resource set includes one or more types of the following information:
a slot set of an SL-PRS resource;
a subchannel set of an SL-PRS resource;
a resource reservation cycle of SL-PRS;
a resource reservation cycle list of SL-PRS;
a reference slot location of an SL-PRS resource; or
a resource combination corresponding to SL-PRS resource.

In some embodiments, the reference slot location of SL-PRS resource is a reference slot location used in case of determining an absolute slot location of the slot set of SL-PRS resource in a direct frame number (DFN).

In some embodiments, the reference slot location of SL-PRS resource is indicated by one or more types of the following indexes:
a DFN index; or
a slot index within a direct frame.

In some embodiments, the resource combination corresponding to SL-PRS resource includes one or more types of the following information:
a time resource indication index;
a frequency resource indication index; or
a resource reservation cycle.

In some embodiments, a value of the second content indication information is a first value, indicating that the first terminal requests a third resource set from the second terminal, where the third resource set includes a resource preferred by the first terminal for transmitting or receiving SL-PRS; or
a value of the second content indication information is a second value, indicating that the first terminal requests a fourth resource set from the second terminal, where the fourth resource set includes a resource not preferred by the first terminal for transmitting or receiving SL-PRS.

In some embodiments, the third resource set or the fourth resource set includes one or more types of the following information:
a quantity of subchannels occupied by SL-PRS;
a resource reservation cycle of SL-PRS;
a resource reservation cycle list of SL-PRS;
a location of a resource selection window of SL-PRS; or
a location of a subchannel selection window of SL-PRS.

In some embodiments, the information of SL-PRS RSRP includes one or more types of the following information:
information of SL-PRS RSRP of at least one resource in at least one resource set; or
information of SL-PRS RSRPs of resources meeting a given condition in at least one resource set.

In some embodiments, the information of SL-PRS RSRP includes one or more types of the following information:
intensity information of SL-PRS RSRP; or
bitmap information of SL-PRS RSRP, where the bitmap information is used to indicate whether multiple SL-PRS RSRPs exceed a target threshold.

In some embodiments, the intensity information of SL-PRS RSRP is intensity information of SL-PRS RSRP of a subchannel or a subchannel set.

In some embodiments, the information of SL-PRS RSRPs of resources meeting the given condition in at least one resource set includes one or more types of the following information:
intensity information of SL-PRS RSRPs of top N resources after ordering SL-PRS RSRP intensities from high to low in at least one resource set;
intensity information of SL-PRS RSRPs of top M resources after ordering SL-PRS RSRP intensities from low to high in at least one resource set;
bitmap information of SL-PRS RSRPs of resources with SL-PRS RSRP intensities greater than a target threshold in at least one resource set;
bitmap information of SL-PRS RSRPs of resources with SL-PRS RSRP intensities equal to a target threshold in at least one resource set;
bitmap information of SL-PRS RSRPs of resources with SL-PRS RSRP intensities lower than a target threshold in at least one resource set; or
bitmap information of SL-PRS RSRPs of resources with SL-PRS RSRP intensities equal to a target threshold in at least one resource set.

In some embodiments, the at least one resource set includes one or more types of the following sets:
the first resource set, where the first resource set includes a resource preferred by the second terminal for transmitting or receiving SL-PRS;
the second resource set, where the second resource set includes a resource not preferred by the second terminal for transmitting or receiving SL-PRS;
the third resource set, where the third resource set includes a resource preferred by the first terminal for transmitting or receiving SL-PRS; or
the fourth resource set, where the fourth resource set includes a resource not preferred by the first terminal for transmitting or receiving SL-PRS

In some embodiments, the target threshold is indicated in one or more of the following ways:
the target threshold being carried through the first coordination information;
the target threshold being configured through dedicated signaling;
the target threshold being pre-configured; or
the target threshold being determined based on a correspondence between a priority of the first coordination information and a threshold.

In some embodiments, the first coordination information is carried by one or more of the following messages:
sidelink control information (SCI);
downlink control information (DCI); or
radio resource control (RRC) signaling.

Embodiments of the present application provide a second terminal, including a memory, a transceiver, and a processor, where
the memory is used for storing a computer program; the transceiver is used for receiving and transmitting data under control of the processor; and the processor is used for reading the computer program in the memory and performing the following operations:
receiving first coordination information transmitted from a first terminal, where the first coordination information includes one or more types of the following information:
type indication information of the first coordination information;
first content indication information of the first coordination information;
second content indication information of the first coordination information;
a first resource set;
a second resource set;
a third resource set;
a fourth resource set;
indication information of a resource set occupied by a sidelink positioning reference signal (SL-PRS);
information of sidelink positioning reference signal (SL-PRS) reference signal received power (RSRP);
priority information; or
zone identifier information.

Embodiments of the present application provide an apparatus for resource coordination, including a transmitting module, where
the transmitting module is used for transmitting first coordination information to a second terminal, where the first coordination information includes one or more types of the following information:
type indication information of the first coordination information;
first content indication information of the first coordination information;
second content indication information of the first coordination information;
a first resource set;
a second resource set;
a third resource set;
a fourth resource set;
indication information of a resource set occupied by a sidelink positioning reference signal (SL-PRS);
information of sidelink positioning reference signal (SL-PRS) reference signal received power (RSRP);
priority information; or
zone identifier information.

In some embodiments, a value of the type indication information is a first value, indicating that the first terminal provides coordination information to the second terminal; or
a value of the type indication information is a second value, indicating that the first terminal requests coordination information from the second terminal.

In some embodiments, a value of the first content indication information is a first value, indicating that the first terminal provides the first resource set to the second terminal, where the first resource set includes a resource preferred by the second terminal for transmitting or receiving SL-PRS; or
a value of the first content indication information is a second value, indicating that the first terminal provides the second resource set to the second terminal, where the second resource set includes a resource not preferred by the second terminal for transmitting or receiving SL-PRS.

In some embodiments, the first resource set or the second resource set includes one or more types of the following information:
a slot set of an SL-PRS resource;
a subchannel set of an SL-PRS resource;
a resource reservation cycle of SL-PRS;
a resource reservation cycle list of SL-PRS;
a reference slot location of an SL-PRS resource; or
a resource combination corresponding to SL-PRS resource.

In some embodiments, the reference slot location of SL-PRS resource is a reference slot location used in case of determining an absolute slot location of the slot set of SL-PRS resource in a direct frame number (DFN).

In some embodiments, the reference slot location of SL-PRS resource is indicated by one or more types of the following indexes:
a DFN index; or
a slot index within a direct frame.

In some embodiments, the resource combination corresponding to SL-PRS resource includes one or more types of the following information:
a time resource indication index;
a frequency resource indication index; or
a resource reservation cycle.

In some embodiments, a value of the second content indication information is a first value, indicating that the first terminal requests a third resource set from the second terminal, where the third resource set includes a resource preferred by the first terminal for transmitting or receiving SL-PRS; or
a value of the second content indication information is a second value, indicating that the first terminal requests a fourth resource set from the second terminal, where the fourth resource set includes a resource not preferred by the first terminal for transmitting or receiving SL-PRS.

In some embodiments, the third resource set or the fourth resource set includes one or more types of the following information:
a quantity of subchannels occupied by SL-PRS;
a resource reservation cycle of SL-PRS;
a resource reservation cycle list of SL-PRS;
a location of a resource selection window of SL-PRS; or
a location of a subchannel selection window of SL-PRS.

In some embodiments, the information of SL-PRS RSRP includes one or more types of the following information:
information of SL-PRS RSRP of at least one resource in at least one resource set; or
information of SL-PRS RSRPs of resources meeting a given condition in at least one resource set.

In some embodiments, the information of SL-PRS RSRP includes one or more types of the following information:
intensity information of SL-PRS RSRP; or
bitmap information of SL-PRS RSRP, where the bitmap information is used to indicate whether multiple SL-PRS RSRPs exceed a target threshold.

In some embodiments, the intensity information of SL-PRS RSRP is intensity information of SL-PRS RSRP of a subchannel or a subchannel set.

In some embodiments, the information of SL-PRS RSRPs of resources meeting the given condition in at least one resource set includes one or more types of the following information:
intensity information of SL-PRS RSRPs of top N resources after ordering SL-PRS RSRP intensities from high to low in at least one resource set;
intensity information of SL-PRS RSRPs of top M resources after ordering SL-PRS RSRP intensities from low to high in at least one resource set;
bitmap information of SL-PRS RSRPs of resources with SL-PRS RSRP intensities greater than a target threshold in at least one resource set;
bitmap information of SL-PRS RSRPs of resources with SL-PRS RSRP intensities equal to a target threshold in at least one resource set;
bitmap information of SL-PRS RSRPs of resources with SL-PRS RSRP intensities lower than a target threshold in at least one resource set; or
bitmap information of SL-PRS RSRPs of resources with SL-PRS RSRP intensities equal to a target threshold in at least one resource set.

In some embodiments, the at least one resource set includes one or more types of the following sets:
the first resource set, where the first resource set includes a resource preferred by the second terminal for transmitting or receiving SL-PRS;
the second resource set, where the second resource set includes a resource not preferred by the second terminal for transmitting or receiving SL-PRS;
the third resource set, where the third resource set includes a resource preferred by the first terminal for transmitting or receiving SL-PRS; or
the fourth resource set, where the fourth resource set includes a resource not preferred by the first terminal for transmitting or receiving SL-PRS

In some embodiments, the target threshold is indicated in one or more of the following ways:
the target threshold being carried through the first coordination information;
the target threshold being configured through dedicated signaling;
the target threshold being pre-configured; or
the target threshold being determined based on a correspondence between a priority of the first coordination information and a threshold.

In some embodiments, the first coordination information is carried by one or more of the following messages:
sidelink control information (SCI);
downlink control information (DCI); or
radio resource control (RRC) signaling.

Embodiments of the present application provide an apparatus for resource coordination, including a receiving module, where
the receiving module is used for receiving first coordination information transmitted from a first terminal, where the first coordination information includes one or more types of the following information:
type indication information of the first coordination information;
first content indication information of the first coordination information;
second content indication information of the first coordination information;
a first resource set;
a second resource set;
a third resource set;
a fourth resource set;
indication information of a resource set occupied by a sidelink positioning reference signal (SL-PRS);
information of sidelink positioning reference signal (SL-PRS) reference signal received power (RSRP);
priority information; or
zone identifier information.

Embodiments of the present application further provide a processor-readable storage medium, where the processor-readable storage medium stores a computer program, and the computer program is used to cause a processor to perform any of the methods for resource coordination described above.

Embodiments of the present application further provide a computer-readable storage medium, where the computer-readable storage medium stores a computer program, and the computer program is used to cause a computer to perform any of the methods for resource coordination described above.

Embodiments of the present application further provide a communication device-readable storage medium, where the computer-readable storage medium stores a computer program, and the computer program is used to cause a communication device to perform any of the methods for resource coordination described above.

Embodiments of the present application further provide a chip product-readable storage medium, where the computer-readable storage medium stores a computer program, and the computer program is used to cause a chip product to perform any of the methods for resource coordination described above.

In the methods and apparatuses for resource coordination, and the storage medium provided in the embodiments of the present application, by transmitting the coordination information between terminals, the terminals is allowed to consider SL-PRS resource coordination between terminals during the resource selection procedure of SL-PRS, which reduces the probability of SL-PRS transmission failure caused by SL-PRS resource collision, and improves the positioning accuracy of sidelink.

### BRIEF DESCRIPTION OF THE DRAWINGS

To provide a clearer explanation of solutions in the embodiments of the present application, a brief introduction is given to the accompanying drawings required for the description of the embodiments. The accompanying drawings in the following description are some embodiments of the present application. For those skilled in the art, other drawings may be obtained based on these drawings without creative effort.
FIG. 1 is a first schematic flowchart of a method for resource coordination according to an embodiment of the present application;
FIG. 2 is a schematic diagram of type indication in first coordination information of a method for resource coordination according to an embodiment of the present application;
FIG. 3 is a schematic diagram of providing content indication in first coordination information of a method for resource coordination according to an embodiment of the present application;
FIG. 4 is a schematic diagram of requesting content indication in first coordination information of a method for resource coordination according to an embodiment of the present application;
FIG. 5 is a schematic diagram of indication for providing a second resource set in first coordination information of a method for resource coordination according to an embodiment of the present application;
FIG. 6 is a schematic diagram of indication for providing a third resource set in first coordination information of a method for resource coordination according to an embodiment of the present application;
FIG. 7 is a second schematic flowchart of a method for resource coordination according to an embodiment of the present application;
FIG. 8 is a schematic structural diagram of a first terminal according to an embodiment of the present application;
FIG. 9 is a schematic structural diagram of a second terminal according to an embodiment of the present application;
FIG. 10 is a first schematic structural diagram of an apparatus for resource coordination according to an embodiment of the present application; and
FIG. 11 is a second schematic structural diagram of an apparatus for resource coordination according to an embodiment of the present application.

### DETAILED DESCRIPTION

In traditional new radio (NR) positioning technologies, the downlink positioning reference signal and the uplink positioning reference signal are only defined in the air interface between a base station and a terminal, while the sidelink positioning reference signal (SL-PRS) is not defined in the direct communication interface (PC5 interface) between terminals. Considering the requirement for relative positioning between terminals, i.e., sidelink positioning, it is necessary to introduce SL-PRS transmitted between terminals. Terminals may directly complete the relative positioning procedure between terminals in the sidelink without relying on a base station.

Before transmitting SL-PRS, the terminal needs to first determine a time-frequency resource used for SL-PRS transmission. If time-frequency resources for transmitting SL-PRS used by multiple terminals collide, it causes serious mutual interference of SL-PRSs between terminals, which affects the positioning accuracy of sidelink. To improve positioning accuracy, the terminal often uses a relatively large SL-PRS transmission bandwidth in case of transmitting SL-PRS, which means that each SL-PRS occupies more time-frequency resources, increasing the collision probability and severity of SL-PRSs transmitted between multiple terminals.

Based on the above problems, the embodiments of the present application provides a method for transmitting resource coordination information for SL-PRSs between terminals, which transmits coordination information between terminals, and the coordination information includes one or more types of the following information: type indication information of the first coordination information; first content indication information of the first coordination information; second content indication information of the first coordination information; a first resource set; a second resource set; a third resource set; a fourth resource set; indication information of a resource set occupied by SL-PRS; information of SL-PRS reference signal received power (RSRP); priority information; or zone identifier information. By transmitting the above coordination information between terminals, the SL-PRS resource coordination between terminals may be considered in the resource selection procedure of SL-PRS, which reduces the probability of SL-PRS transmission failure caused by SL-PRS resource collision, improves the transmission success rate of SL-PRS, and enhances the positioning accuracy of sidelink.

The solutions in the embodiments of the present application are clearly and completely described in the following with reference to the accompanying drawings in the embodiments of the present application to clarify the objectives, solutions, and advantages of the embodiments of the present application. These embodiments are only a part of the embodiments of the present application, and not all of the embodiments. All other embodiments obtained by a skilled person in the art based on the embodiments of the present application without any creative effort belong to the scope of the present application.

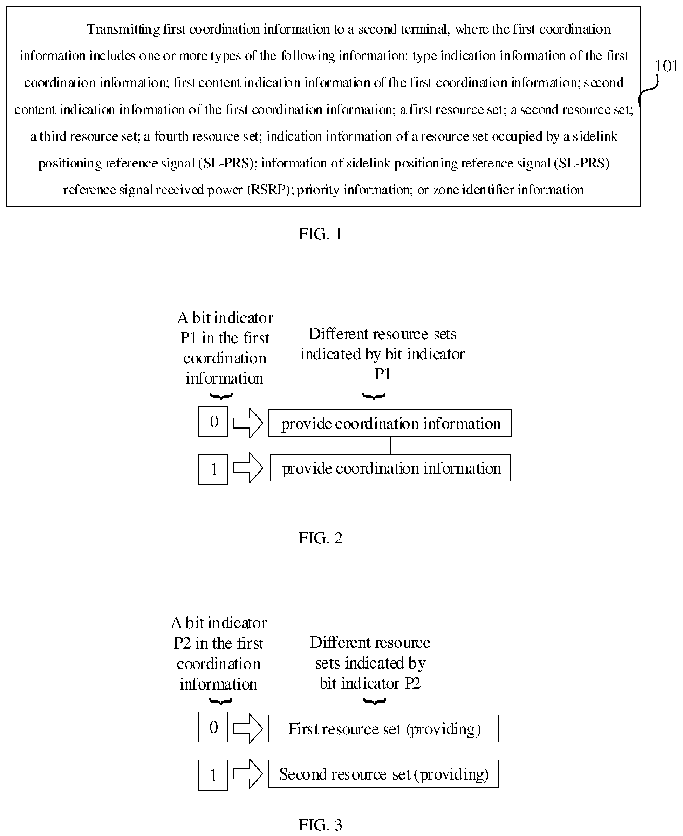

FIG. 1 is a first schematic flowchart of a method for resource coordination according to an embodiment of the present application. As shown in FIG. 1, the embodiments of the present application provide a method for resource coordination, which may be performed by a first terminal, such as a mobile phone, etc. The method includes:
step 101: transmitting first coordination information to a second terminal, where the first coordination information includes one or more types of the following information: type indication information of the first coordination information; first content indication information of the first coordination information; second content indication information of the first coordination information; a first resource set; a second resource set; a third resource set; a fourth resource set; indication information of a resource set occupied by a sidelink positioning reference signal (SL-PRS); information of sidelink positioning reference signal (SL-PRS) reference signal received power (RSRP); priority information; or zone identifier information.

In an embodiment, the first terminal transmits the first coordination information to the second terminal, where the first coordination information is used to coordinate the time-frequency resources for SL-PRSs between terminals.

The first coordination information includes one or more types of the following information: type indication information of the first coordination information; first content indication information of the first coordination information; second content indication information of the first coordination information; a first resource set; a second resource set; a third resource set; a fourth resource set; indication information of a resource set occupied by SL-PRS; information of SL-PRS reference signal received power (RSRP); priority information; or zone identifier information.

The second terminal receives the first coordination information and performs corresponding resource coordination based on the different information contents contained in the first coordination information.

In an embodiment, the first coordination information includes indication information of a resource set occupied by SL-PRS. The indication information of the resource set occupied by SL-PRS is obtained by the first terminal through resource perception. Based on the indication information, the second terminal may further coordinate the time-frequency resources based on the resource set occupied by SL-PRS, or select other unoccupied time-frequency resources to avoid collisions between the time-frequency resources used for transmitting SL-PRS.

In an embodiment, after determining the SL-PRS resource, the second terminal transmits SL-PRS to the first terminal or to other terminals.

In an embodiment, the priority information may include priority information of the first coordination information or priority information of SL-PRS.

For example, the first terminal transmits multiple pieces of first coordination information to the second terminal, namely S1, S2, and S3. The multiple pieces of first coordination information include priority information of each first coordination information transmitted: S1 is first processed, S2 is processed after processing S1, and S3 is processed after processing S2. The second terminal processes S1, S2, and S3 in an order of priority based on the priority information of each first coordination information.

As another example, the first terminal transmits the first coordination information to the second terminal, where the first coordination information includes the priority information of SL-PRS. The SL-PRS coordination resources are coordinated for SL-PRS in an order according to the priorities of SL-PRS.

In an embodiment, the zone identifier information may include a zone identifier of the first terminal and a zone identifier of the second terminal.

For example, the first terminal transmits the first coordination information to the second terminal, where the first coordination information includes the zone identifier information of the first terminal. Based on the zone identifier information, the second terminal may know that the received first coordination information is transmitted from the first terminal, and thus may perform SL-PRS resources coordination with the first terminal normally.

As another example, the first terminal transmits the first coordination information to the second terminal, where the first coordination information includes the zone identifier information of the second terminal. Based on the zone identifier information, the second terminal may determine that the second terminal is going to perform SL-PRS resource coordination.

In the method for resource coordination provided in the embodiments of the present application, by transmitting the first coordination information between terminals, terminals are allowed to consider coordination of SL-PRS resources between terminals during the resource selection procedure of SL-PRS, which reduces the probability of SL-PRS transmission failure caused by SL-PRS resource collision, and improves the positioning accuracy of sidelink.

In some embodiments, a value of the type indication information is a first value, indicating that the first terminal provides coordination information to the second terminal; or a value of the type indication information is a second value, indicating that the first terminal requests coordination information from the second terminal.

In an embodiment, the types of first coordination information may be divided into two categories: one is that the first terminal provides coordination information to the second terminal; another is that the first terminal requests coordination information from the second terminal. The type of the first coordination information is indicated by either the first value or the second value. The value of the type indication information is the first value, indicating that the first terminal provides coordination information to the second terminal; or the value of the type indication information is the second value, indicating that the first terminal requests coordination information from the second terminal.

The first terminal provides coordination information to the second terminal, where the coordination information includes time-frequency occupancy information of the resources that need to be coordinated. The first terminal requests coordination information from the second terminal, that is, the first terminal only transmits request information to the second terminal.

In an embodiment, the type of the first coordination information may be indicated by at least one bit.

For example, the bit used to indicate the type of information in the first coordination information is set to P1, which occupies 1 bit of the first coordination information, and the second terminal receives the first coordination information transmitted from the first terminal. In case that the type indication P1 of the first coordination information in the first coordination information is 0, it indicates that the first coordination information contains the coordination information provided by the first terminal to the second terminal. In case that the type indication P1 of the first coordination information in the first coordination information is 1, it indicates that the first coordination information contains information about the first terminal requesting resource coordination from the second terminal.

In the method for resource coordination provided in the embodiments of the present application, by transmitting the coordination information between terminals, terminals are allowed to consider coordination of SL-PRS resources between terminals during the resource selection procedure of SL-PRS, which reduces the probability of SL-PRS transmission failure caused by SL-PRS resource collision, and improves the positioning accuracy of sidelink.

In some embodiments, a value of the first content indication information is a first value, indicating that the first terminal provides the first resource set to the second terminal, where the first resource set includes a resource preferred by the second terminal for transmitting or receiving SL-PRS; or
a value of the first content indication information is a second value, indicating that the first terminal provides the second resource set to the second terminal, where the second resource set includes a resource not preferred by the second terminal for transmitting or receiving SL-PRS.

In an embodiment, the first content of the first coordination information may be the resource coordination information of the first resource set or the resource coordination information of the second resource set. The first content of the first coordination information may be indicated by the first value or the second value. The value of the first content indication information is the first value, indicating that the first terminal provides the first resource set to the second terminal; or the value of the first content indication information is a second value, indicating that the first terminal provides the second resource set to the second terminal.

The resource preferred by the second terminal for transmitting or receiving SL-PRS included in the first resource set refers to a recommended time-frequency resource information transmitted from the first terminal to the second terminal to avoid resource collision, such as the resource that the first terminal plans to use for SL-PRS transmission of the first terminal.

The resource not preferred by the second terminal for transmitting or receiving SL-PRS included in the second terminal refers to non-recommended time-frequency resource information transmitted from the first terminal to the second terminal, such as the time-frequency resources already occupied by other terminals except for the first terminal and the second terminal.

In an embodiment, the content of the first coordination information may be indicated by at least one bit.

For example, the bit used to indicate the content provided in the first coordination information is set to P2, which occupies 1 bit of the first coordination information, and the second terminal receives the first coordination information transmitted from the first terminal. In case the obtained type indication P1 of the first coordination information in the first coordination information is 0, that is, the first coordination information contains coordination information provided by the first terminal to the second terminal, if the type indication P1 of the first coordination information is 0, it indicates that the first terminal provides the first resource set to the second terminal; if the type indication P1 of the first coordination information is 1, it indicates that the first terminal provides the second resource set to the second terminal.

In the method for resource coordination provided in the embodiments of the present application, the content of the resource coordination information provided by the first terminal to the second terminal is indicated through the value of the first content indication information, which may flexibly indicate whether the provided content of the first coordination information transmitted between terminals is the first resource set or the second resource set, and the provided content may be flexibly converted, improving the transmission success rate of SL-PRS.

In some embodiments, the first resource set or the second resource set includes one or more types of the following information: a slot set of an SL-PRS resource; a subchannel set of an SL-PRS resource; a resource reservation cycle of SL-PRS; a resource reservation cycle list of SL-PRS; a reference slot location of an SL-PRS resource; or a resource combination corresponding to SL-PRS resource.

In an embodiment, the slot set or subchannel set of SL-PRS resource may be determined based on channel information such as link transmission power, delay spread spectrum, and reception quality to further improve the transmission success rate of SL-PRS.

In an embodiment, the first resource set or the second resource set may include the resource reservation cycle of SL-PRS or a resource reservation period list of SL-PRS. The slot occupied by the resource reservation cycle is the time-frequency resource information in the second resource set considered by the first terminal, which is the resource not preferred by the second terminal for transmitting or receiving SL-PRS.

In the method for resource coordination provided in the embodiments of the present application, the information indicated in the first coordination information includes indication information of the first resource set or the second resource set. Based on the indication information, the resource set recommended or not recommended by the first terminal for SL-PRS transmission is indicated, which reduces the probability of SL-PRS transmission failure caused by SL-PRS resource collision.

In some embodiments, the reference slot location of SL-PRS resource is a reference slot location used in case of determining an absolute slot location of the slot set of SL-PRS resource in a direct frame number (DFN).

In an embodiment, the first resource set or the second resource set may include the reference slot location of SL-PRS resource, and the reference slot location of SL-PRS resource is the reference slot location used in case of determining the absolute slot location of the slot set of SL-PRS resource in DFN.

In some embodiments, the reference slot location of SL-PRS resource is indicated by one or more types of the following indexes: a DFN index; or a slot index within a direct frame.

In an embodiment, the reference slot location of SL-PRS resource may be indicated by DFN index or by slot index within a direct frame. Thus, the reference slot location of SL-PRS resource may be flexibly indicated.

In some embodiments, the resource combination corresponding to SL-PRS resource includes one or more types of the following information: a time resource indication index; a frequency resource indication index; or a resource reservation cycle.

In an embodiment, a resource combination corresponding to SL-PRS resource may be a triplet, quadruple, quintuple, etc., where the triplet may include a time resource indication index; a frequency resource indication index; or a resource reservation cycle.

In some embodiments, a value of the second content indication information is a first value, indicating that the first terminal requests a third resource set from the second terminal, where the third resource set includes a resource preferred by the first terminal for transmitting or receiving SL-PRS; or
a value of the second content indication information is a second value, indicating that the first terminal requests a fourth resource set from the second terminal, where the fourth resource set includes a resource not preferred by the first terminal for transmitting or receiving SL-PRS.

In an embodiment, the resource preferred by the first terminal for transmitting or receiving SL-PRS included in the third resource set refers to a recommended time-frequency resource information transmitted from the second terminal to the first terminal to avoid resource collision, such as the resource or subchannel selection window planned by the first terminal for SL-PRS transmission of the first terminal.

The resource not preferred by the first terminal for transmitting or receiving SL-PRS included in the fourth resource set refers to non-recommended time-frequency resource information transmitted from the second terminal to the first terminal, such as the time-frequency resources already occupied by other terminals except for the first terminal and the second terminal.

In an embodiment, the content information of the first coordination information may be indicated by at least one bit.

For example, the bit used to indicate the requested content in the first coordination information is set to P3, which occupies 1 bit of the first coordination information. The second terminal receives the first coordination information and, based on P1, learns that the type of SL-PRS coordination information is the information that the first terminal requests the second terminal to coordinate resources. Then, based on P3, the second terminal obtains the content of the SL-PRS coordination information.

In the method for resource coordination provided in the embodiments of the present application, the content of the resource coordination information requested by the first terminal to the second terminal is indicated through the value of the second content indication information, which may flexibly indicate whether the provided content of the first coordination information transmitted between terminals is the third resource set or the fourth resource set, and the provided content may be flexibly converted, improving the transmission success rate of SL-PRS.

In some embodiments, the third resource set or the fourth resource set includes one or more types of the following information: a quantity of subchannels occupied by SL-PRS; a resource reservation cycle of SL-PRS; a resource reservation cycle list of SL-PRS; a location of a resource selection window of SL-PRS; or a location of a subchannel selection window of SL-PRS.

In an embodiment, the first coordination information transmitted from the first terminal to the second terminal may include the third resource set or the fourth resource set, where the third resource set or the fourth resource set may include the location of the resource selection window which is the resource selection window in which the first terminal plans to transmit SL-PRS.

The third resource set or fourth resource set may also include the location of the subchannel selection window of SL-PRS, which is the subchannel selection window in which the first terminal plans to transmit SL-PRS.

For example, in case that the first terminal requests coordination information from the second terminal, the first terminal determines the resource selection window or subchannel selection window of SL-PRS through resource perception. The first terminal transmits the resource selection window or the subchannel selection window to the second terminal in the first coordination information. After receiving the information, the second terminal prioritizes the resources indicated by the location of the resource selection window or subchannel selection window in case of providing the resource coordination information of the SL-PRS to the first terminal as the first resource set to be transmitted to the first terminal, to avoid resource collisions.

In the method for resource coordination provided in the embodiments of the present application, by the indication information in the third resource set or the fourth resource set, the coordination range of the resource set requested by the first terminal for the SL-PRS transmission of the first terminal may be indicated, which facilitates the second terminal to select and determine the first resource set, reduces the probability of SL-PRS transmission failure caused by SL-PRS resource collision, and improves the positioning accuracy of sidelink.

In some embodiments, the information of SL-PRS RSRP includes one or more types of the following information: information of SL-PRS RSRP of at least one resource in at least one resource set; or information of SL-PRS RSRPs of resources meeting a given condition in at least one resource set.

In an embodiment, the information of SL-PRS RSRP may include information of SL-PRS RSRP of at least one resource in at least one resource set among the first resource set, the second resource set, the third resource set, or the fourth resource set. The information of SL-PRS RSRP may also include information of SL-PRS RSRPs of resources meeting the given condition in at least one of the first resource set, the second resource set, the third resource set, or the fourth resource set.

In some embodiments, the information of SL-PRS RSRP includes one or more types of the following information: intensity information of SL-PRS RSRP; or bitmap information of SL-PRS RSRP, where the bitmap information is used to indicate whether multiple SL-PRS RSRPs exceed a target threshold.

In an embodiment, the information of SL-PRS RSRP includes the bitmap information of SL-PRS RSRP, where the bitmap information is used to indicate whether multiple SL-PRS RSRPs exceed a target threshold.

For example, if SL-PRS RSRP exceeds the target threshold, the corresponding bit of the resource is denoted as 1; if the SL-PRS RSRP of a resource does not exceed the target threshold, the corresponding bit of the resource is denoted as 0, and bits of multiple resources form bitmap information.

In some embodiments, the intensity information of SL-PRS RSRP is intensity information of SL-PRS RSRP of a subchannel or a subchannel set.

For example, the higher the SL-PRS RSRP intensity of a subchannel or a subchannel set is, the more secure the SL-PRS transmission is. If the SL-PRS RSRP intensity is very low, it may not be possible to receive the SL-PRS. Selecting subchannels or subchannel sets with higher RSRP intensity may improve the success rate of SL-PRS transmission.

In some embodiments, the information of SL-PRS RSRPs of resources meeting the given condition in at least one resource set includes one or more types of the following information: intensity information of SL-PRS RSRPs of top N resources after ordering SL-PRS RSRP intensities from high to low in at least one resource set; intensity information of SL-PRS RSRPs of top M resources after ordering SL-PRS RSRP intensities from low to high in at least one resource set; bitmap information of SL-PRS RSRPs of resources with SL-PRS RSRP intensities greater than a target threshold in at least one resource set; bitmap information of SL-PRS RSRPs of resources with SL-PRS RSRP intensities equal to a target threshold in at least one resource set; bitmap information of SL-PRS RSRPs of resources with SL-PRS RSRP intensities lower than a target threshold in at least one resource set; or bitmap information of SL-PRS RSRPs of resources with SL-PRS RSRP intensities equal to a target threshold in at least one resource set.

In an embodiment, the information of SL-PRS RSRPs of resources that meet the preset condition in at least one of the first resource set, the second resource set, the third resource set, and the fourth resource set may include intensity information of SL-PRS RSRPs of top N resources after ordering SL-PRS RSRP intensities from high to low in at least one of the resource sets, where N is a positive integer greater than or equal to 1.

The information of SL-PRS RSRPs of resources meeting the given condition in at least one of the first resource set, the second resource set, the third resource set, or the fourth resource set may also include intensity information of SL-PRS RSRPs of the top M resources after ordering SL-PRS RSRP intensities from low to high in at least one of the resource sets, where M is a positive integer greater than or equal to 1.

The information of SL-PRS RSRPs of resources meeting the given condition in at least one of the first resource set, the second resource set, the third resource set, or the fourth resource set may also include RSRP bitmap information of resources, in at least one resource set of the above resource sets, with SL-PRS RSRP intensity greater than or equal to the target threshold.

The information of SL-PRS RSRPs of resources meeting the given condition in at least one of the first resource set, the second resource set, the third resource set, or the fourth resource set may also include RSRP bitmap information of resources, in at least one resource set of the above resource sets, with SL-PRS RSRP intensity lower than or equal to the target threshold.

For example, the first terminal transmits the first coordination information to the second terminal, where the first coordination information includes the first resource set, and the first resource set includes three subchannels: subchannel 1, subchannel 2, and subchannel 3. The SL-PRS RSRP intensity of subchannel 1 is -75 dBm, the SL-PRS RSRP intensity of subchannel 2 is -71 dBm, and the SL-PRS RSRP intensity of subchannel 3 is -80 dBm.

The information of SL-PRS RSRP of the resources meeting the given condition may include the intensity information of SL-PRS RSRP of the resource with a highest SL-PRS RSRP intensity in the first resource set, that is, the intensity information of SL-PRS RSRP of subchannel 2. Alternatively, the information of SL-PRS RSRP of the resources meeting the given condition may include the intensity information of SL-PRS RSRP of the resource with a lowest SL-PRS RSRP intensity, namely the intensity information of SL-PRS RSRP of subchannel 3. Alternatively, the information of SL-PRS RSRP of the resources meeting the given condition may also include RSRP bitmap information for resources with SL-PRS RSRP intensity greater than or equal to the target threshold (-73 dBm), i.e., the RSRP bitmap information for subchannel 2.

In the method for resource coordination provided in the embodiments of the present application, based on the intensity information and bitmap information of SL-PRS RSRP of coordination resources, the intensity signaling and bitmap signaling of SL-PRS RSRP of each subchannel in the resource set may be flexibly indicated, which improves the transmission success rate of SL-PRS.

In some embodiments, the at least one resource set includes one or more types of the following sets:
the first resource set, where the first resource set includes a resource preferred by the second terminal for transmitting or receiving SL-PRS;
the second resource set, where the second resource set includes a resource not preferred by the second terminal for transmitting or receiving SL-PRS;
the third resource set, where the third resource set includes a resource preferred by the first terminal for transmitting or receiving SL-PRS; or
the fourth resource set, where the fourth resource set includes a resource not preferred by the first terminal for transmitting or receiving SL-PRS

In an embodiment, the first resource set includes the resource preferred by the second terminal for transmitting or receiving SL-PRS. That is, the first resource set is the recommended time-frequency resource information transmitted from the second terminal to the first terminal to avoid resource collision.

The second resource set includes the resource not preferred by the second terminal for transmitting or receiving SL-PRS. That is, the second resource set is the non-recommended time-frequency resource information transmitted from the second terminal to the first terminal. In case that the first resource set cannot be selected, the second resource set is selected.

The third resource set includes the resource preferred by the first terminal for transmitting or receiving SL-PRS, i.e., the recommended time-frequency resource information transmitted from the second terminal to the first terminal to avoid resource collision.

The fourth resource set includes the resource not preferred by the second terminal for transmitting or receiving SL-PRS, i.e., the non-recommended time-frequency resource information transmitted from the second terminal to the first terminal. In case that the first resource set cannot be selected, the second resource set is selected.

In the method for resource coordination provided in the embodiments of the present application, the flexible conversion of the content of the first coordination information is allowed by providing the first resource set or the second resource set to the second terminal from the first terminal, and requesting the third resource set or the fourth resource set from the second terminal by the first terminal, which reduces the probability of SL-PRS transmission failure caused by SL-PRS resource collisions, and improves the positioning accuracy of sidelink.

In some embodiments, the target threshold is indicated in one or more of the following ways: the target threshold being carried through the first coordination information; the target threshold being configured through dedicated signaling; the target threshold being pre-configured; or the target threshold being determined based on a correspondence between a priority of the first coordination information and a threshold.

In an embodiment, the target threshold is carried by the first coordination information. The target threshold may also be configured through dedicated signaling, such as radio resource control (RRC) signaling; the target threshold may also be pre-configured; in addition, the target threshold may also be obtained by querying a pre-configured table of relationship between a value of the first threshold and packet priority information.

In the method for resource coordination provided in the embodiments of the present application, the flexible configuration of the first threshold is allowed by indicating the first threshold information in the first coordination information or dedicated signaling, or pre configuring the first threshold, which reduces the probability of SL-PRS transmission failure caused by SL-PRS resource collisions, and improves the positioning accuracy of sidelink.

In some embodiments, the first coordination information is carried by one or more of the following messages: sidelink control information (SCI); downlink control information (DCI); or radio resource control (RRC) signaling.

In an embodiment, the first coordination information may be carried by SCI. In an embodiment, the SCI may be a new format SCI, such as SCI Format 2D, SCI Format 3F, SCI Format 2-6, SCI Format 3_7, etc.

The first coordination information may also be carried by DCI. The first coordination information may also be carried by RRC signaling, such as Uu interface RRC signaling or PC5 interface RRC signaling.

In an embodiment, the first coordination information may also be jointly carried by the above-mentioned multiple carriers, the resource set may be indicated by SCI, and the information of RSRP may be indicated by RRC signaling.

In the method for resource coordination provided in the embodiments of the present application, the flexible transmission of the first coordination information is allowed by using SCI, DCI, RRC, or a combination of these carriers, which improves the transmission success rate of SL-PRS, and enhances the positioning accuracy of sidelink.

Below are specific examples to further illustrate the method for resource coordination provided by the above embodiments.

### Example 1: the type of SL-PRS coordination information is indicated through the information type indication P1 in the first coordination information.

In an embodiment, terminal A transmits the first coordination information to terminal B, where the first coordination information carries time-frequency resource indication information for at least one resource set from the first resource set preferred by terminal B for SL-PRS or the second resource set not preferred by terminal B for SL-PRS; alternatively, the first coordination information carries a request message from terminal A to terminal B for SL-PRS resource coordination.

The first coordination information contains at least one bit, represented by P1, which is used to indicate "providing coordination information" or "requesting coordination information".

In case that the bit P1 is 0, it indicates that the first terminal provides coordination information to the second terminal. That is, the first coordination information contains time-frequency occupancy information of the resource that needs to be coordinated.

In case that the bit P1 is 1, it indicates that the first terminal requests coordination information from the second terminal. That is, the first coordination information contains request information for resource coordination.

In case that P1 = 1, since the first coordination information is "requesting coordination information", it does not contain time-frequency domain information. However, in case that P1 = 0, the first coordination information contains time-frequency occupancy information of the resource that needs to be coordinated. Therefore, a quantity of bits in the first coordination information in case that P1 = 1 is slightly less than in case that P1 = 0. The quantity of bits in the first coordination information in case that P1 = 0 is different from the quantity of bits in case that P1 = 1. In the embodiments of the present application, padding bits may be used to ensure that the quantity of bits for the first coordination information is the same in case that P1 = 0 and P1 = 1; it is also possible not to process the quantity of bits in the first coordination information, and to maintain the quantity of bits in the first coordination information in case that P1 = 0 being different from the quantity of bits in case that P1 = 1.

FIG. 2 is a schematic diagram of type indication in first coordination information of a method for resource coordination according to an embodiment of the present application. As shown in FIG. 2, the first coordination information contains one bit P1 to indicate whether it indicates "providing coordination information" or "requesting coordination information".

In this example, the resource coordination information in the first coordination information may indicate "providing coordination information" or "requesting coordination information". "Providing coordination information" refers to that what is carried in the first coordination information is specific recommended or non-recommended time-frequency resource information of SL-PRS transmitted from terminal A to terminal B. That is, terminal A provides coordination information of SL-PRS to terminal B. "Requesting coordination information" refers to that what is carried in the first coordination information is coordination request information transmitted from terminal A to terminal B. That is, terminal A only transmits request information to terminal B, requesting terminal B to transmit the specific recommended or non-recommended time-frequency resource information of SL-PRS to terminal A.

The information type indication method for SL-PRS resource coordination may flexibly indicate whether the first coordination information transmitted between terminals is "providing coordination information" or "requesting coordination information". The information type conversion is flexible and applicable to different coordination scenarios, which reduces the probability of SL-PRS transmission failure caused by SL-PRS resource collision, and improves the transmission success rate of SL-PRS.

### Example 2: the first content indication P2 in the first coordination information indicates the content of the provided SL-PRS coordination information.

Terminal A transmits the first coordination information to terminal B, where the first coordination information carries time-frequency resource indication information for at least one of the first resource set preferred by terminal B for SL-PRS or the second resource set not preferred by terminal B for SL-PRS.

FIG. 3 is a schematic diagram of providing content indication in first coordination information of a method for resource coordination according to an embodiment of the present application. As shown in FIG. 3, in case that P1 = 0, that is, in case of providing coordination information, the first coordination information contains 1 bit (i.e., P2) to indicate whether the resource coordination information provided in the first coordination information is the first resource set or the second resource set.

In this example, the type of the resource coordination information in the first coordination information is "providing coordination information". "Providing coordination information" refers to that what is carried in the first coordination information is specific recommended or non-recommended time-frequency resource information of SL-PRS transmitted from terminal A to terminal B. That is, terminal A provides coordination information of SL-PRS to terminal B. At this point, to distinguish whether the first coordination information is recommended time-frequency resource information, i.e., the first resource set, or non-recommended time-frequency resource information, i.e., the second resource set, a bit indicator P2 is introduced to indicate the first resource set or the second resource set.

The provided content indication method for SL-PRS resource coordination may flexibly indicate whether the first coordination information transmitted between terminals is the "first resource set" or the "second resource set". The provided content conversion is flexible, which reduces the probability of SL-PRS transmission failure caused by SL-PRS resource collision, and improves the transmission success rate of SL-PRS.

### Example 3: the second content indication P3 in the first coordination information indicates the content of the requested SL-PRS coordination information.

Terminal A transmits the first coordination information to terminal B, where the first coordination information carries the request information from terminal A to request terminal B to coordinate SL-PRS resources.

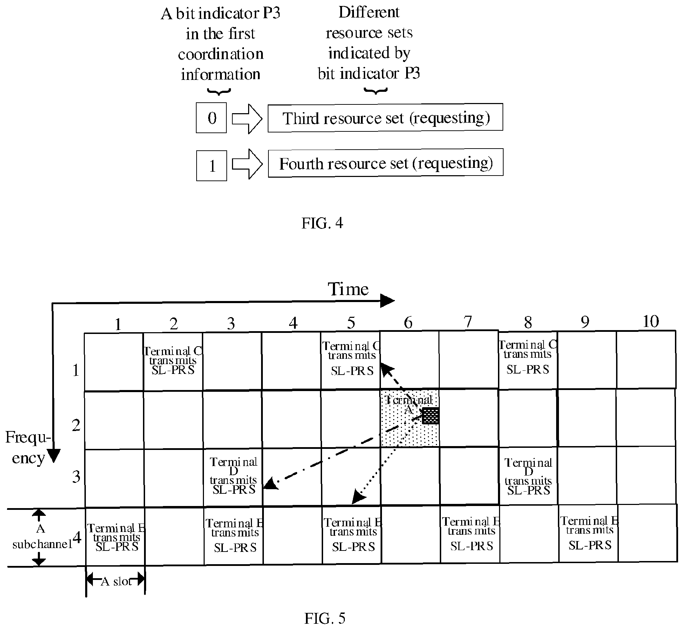

FIG. 4 is a schematic diagram of requesting content indication in first coordination information of a method for resource coordination according to an embodiment of the present application. As shown in FIG. 4, in case that P1 = 1, that is, in case that terminal A requests coordination information, the first coordination information contains 1 bit (i.e., P3) to indicate that what is requested in the first coordination information is the resource request information of the third resource set or the fourth resource set.

In this example, the type of the resource coordination information in the first coordination information is "requesting coordination information". "Requesting coordination information" refers to that what is carried in the first coordination information is coordination request information transmitted from terminal A to terminal B. That is, terminal A only transmits request information to terminal B, requesting terminal B to transmit specific SL-PRS recommended or non-recommended time-frequency resource information to terminal A, without transmitting specific time-frequency resource information. At this point, to distinguish whether the first coordination information is recommended time-frequency resource information, i.e., the third resource set, or non-recommended time-frequency resource information, i.e., the fourth resource set, a bit indicator P3 is introduced to indicate the third resource set or the fourth resource set.

The second content indication P3 in the first coordination information indicates the content of the requested SL-PRS coordination information, which may flexibly indicate whether the request content of the first coordination information transmitted between terminals is the "third resource set" or the "fourth resource set". The conversion of requested content is flexible, which reduces the probability of SL-PRS transmission failure caused by SL-PRS resource collision, and improves the success rate of SL-PRS transmission.

### Example 4: resources are coordinated based on the indication information of a resource set occupied by SL-PRS.

Terminal A transmits the first coordination information to terminal B, where the first coordination information carries time-frequency resource indication information for at least one of the first resource set preferred by terminal B for SL-PRS or the second resource set not preferred by terminal B for SL-PRS.

The information indicated in the first coordination information includes at least one piece of the following information for the first resource set or the second resource set:
a slot set of an SL-PRS resource;
a subchannel set of an SL-PRS resource;
a resource reservation cycle of SL-PRS, or a resource reservation cycle list of SL-PRS;
a reference slot location of an SL-PRS resource; or
a resource combination corresponding to SL-PRS resource.

In this example, it is assumed that the first coordination information refers to that terminal A provides coordination information for terminal B, and that terminal A provides non-recommended resources for SL-PRS transmission for terminal B. Thus, terminal A collects what information is not suitable for terminal B to transmit SL-PRS. FIG. 5 is a schematic diagram of indication for providing a second resource set in first coordination information of a method for resource coordination according to an embodiment of the present application. As shown in FIG. 5, terminal A first performs resource perception to learn resources used by terminals C, D, and E:
resources used by terminal C: subchannel 1 on slot 2 with a resource reservation cycle of 3 slots;
resources used by terminal D: subchannel 3 on slot 3 with a resource reservation cycle of 5 slots; and
resources used by terminal E: subchannel 4 on slot 5 with a resource reservation cycle of 2 slots.

Thus, terminal A aggregates the above resource information together to form non-recommended time-frequency resource information, namely the second resource set, and then transmits the second resource set as the first coordination information to terminal B. After receiving the second resource set, terminal B considers staggering the resources indicated in the second resource set (i.e., the SL-PRS resources already reserved by terminals C, D, and E) in case of selecting SL-PRS resources, to avoid the problem of collision between SL-PRS transmission resources.

After terminal B determines the SL-PRS resource, the SL-PRS terminal B transmits may be transmitted to terminal A or to other terminals.

In addition, the first coordination information may also include the reference slot location of SL-PRS resource, or the resource combination corresponding to SL-PRS resource. The reference slot location of SL-PRS resource is the reference slot location used in case of determining the absolute slot location of the slot set of SL-PRS resource in DFN. The reference slot location includes a DFN index and a slot index within the direct frame. The resource combination corresponding to SL-PRS resource is a triplet, which includes a time resource indication index; a frequency resource indication index; or a resource reservation cycle.

The method of indicating the resource set occupied by SL-PRS may indicate the resource set recommended or not recommended by terminal A for SL-PRS transmission, which reduces the probability of SL-PRS transmission failure caused by SL-PRS resource collision, and improves the success rate of SL-PRS transmission.

### Example 5: resource coordination is performed based on the location indication information of the resource selection window of SL-PRS.

Terminal A transmits the first coordination information to terminal B, where the first coordination information carries the request information from terminal A to request terminal B to coordinate SL-PRS resources.

The information indicated in the first coordination information includes at least one piece of the following information of the third resource set or the fourth resource set:
a quantity of subchannels occupied by SL-PRS;
a resource reservation cycle of SL-PRS, or a resource reservation cycle list of SL-PRS;
a location of a resource selection window of SL-PRS; or
a location of a subchannel selection window of SL-PRS.

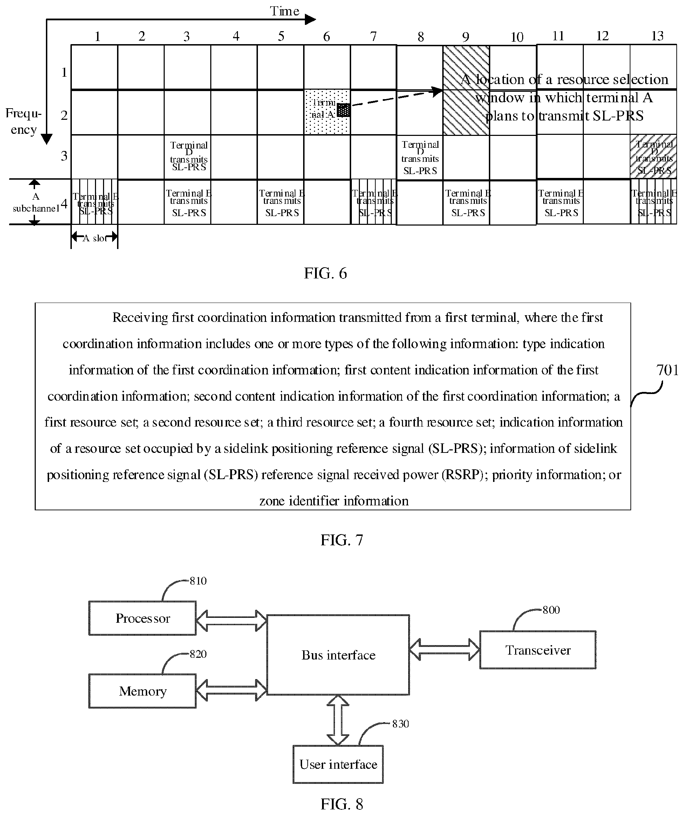

In this example, it is assumed that the first coordination information is that terminal A requests coordination information from terminal B, and that terminal A requests recommended resources for SL-PRS transmission from terminal B. Thus, terminal A collects what information is not suitable for terminal A to transmit SL-PRS. As shown in FIG. 6, terminal A first performs resource perception to learn resources used by terminals D, and E:
resources used by terminal D: subchannel 3 on slot 3 with a resource reservation cycle of 5 slots; and
resources used by terminal E: subchannel 4 on slot 5 with a resource reservation cycle of 2 slots.

After excluding the resources already occupied by terminal D and terminal E, terminal A forms a resource selection window or subchannel selection window that terminal A plans to use for SL-PRS transmission of terminal A, namely the third resource set.

FIG. 6 is a schematic diagram of indication for providing a third resource set in first coordination information of a method for resource coordination according to an embodiment of the present application. As shown in FIG. 6, the resource selection window is from slot 9 to slot 13, and the subchannel selection window is from subchannel 1 to subchannel 2. Then, the third resource set is transmitted as the first coordination information to terminal B. After receiving the third resource set, terminal B prioritizes using the resources indicated in the third resource set as the first resource set transmitted from terminal B to terminal A in case of providing SL-PRS resource coordination information to terminal A, which may meet the coordination information requirements of terminal A, and avoid the problem of collision of SL-PRS transmission resources.

After terminal B determines the recommended SL-PRS resources, terminal B transmits the first resource set, which is the resource set recommended for SL-PRS transmission for terminal A, to terminal A.

The method of indicating the location of the resource selection window in SL-PRS may indicate the coordination range of the resource set requested by terminal A for the SL-PRS transmission of terminal A, which facilitates terminal B to select and determine the first resource set, reduces the probability of SL-PRS transmission failure caused by SL-PRS resource collision, and improves the success rate of SL-PRS transmission. The disadvantage is that it requires adding signaling to indicate the resource set in the first coordination information, which incurs certain signaling overhead.

Example 6: an indication method for intensity information of SL-PRS RSRP based on SL-PRS resource set

Terminal A transmits the first coordination information to terminal B, where the first coordination information carries time-frequency resource indication information for at least one of the first resource set preferred by terminal B for SL-PRS or the second resource set not preferred by terminal B for SL-PRS; alternatively, the first coordination information carries the request information from terminal A to request terminal B to coordinate SL-PRS resources.

Alternatively, the first coordination information may also carry at least one piece of information of SL-PRS RSRP, threshold information of SL-PRS RSRP, priority information, and zone identifier information of at least one of the first resource set and the second resource set.

The indication method for intensity information of SL-PRS RSRP based on SL-PRS resource set is as follows:
first indication way for intensity information of SL-PRS RSRP: the first coordination information contains intensity information of RSRP for each resource in at least one resource set;
second indication way for intensity information of SL-PRS RSRP: the first coordination information contains intensity information of RSRP of the top N resources after ordering RSRP intensities from high to low in at least one resource set, where N is a positive integer greater than or equal to 1;
third indication way for intensity information of SL-PRS RSRP: the first coordination information contains intensity information of RSRPs of top M resources after ordering RSRP intensities from low to high in at least one resource set, where M is a positive integer greater than or equal to 1.

The intensity information of RSRP of SL-PRS resource mentioned above refers to the intensity information of RSRP of the subchannels or subchannel sets occupied by SL-PRS. The intensity information of RSRP of SL-PRS resource mentioned above refers to the intensity information of RSRP of a subchannel or a subchannel set.

Table 1 is a comparison table of three indication ways for intensity information of SL-PRS RSRP. As shown in Table 1, what is carried in the first coordination information transmitted from terminal A to terminal B is the second resource set, which is a resource set not preferred by terminal B for SL-PRS. The second resource set contains 6 subchannels, namely subchannel 1 to subchannel 6.

The first indication way indicates the intensity information of SL-PRS RSRPs of all subchannels.

The second indication way only indicates the intensity information of SL-PRS RSRPs of the top three subchannels after ordering SL-PRS RSRP intensities from high to low, namely subchannels 1, 4, and 5.

The third indication way only indicates the intensity information of SL-PRS RSRPs of the top three subchannels after ordering SL-PRS RSRP intensities from low to high, namely subchannels 2, 3, and 6.

**Table 1 a comparison table of three indication ways for intensity information of SL-PRS RSRP**

| Way | Subch annel 1 | Subch annel 2 | Subch annel 3 | Subch annel 4 | Subch annel 5 | Subch annel 6 | Given threshold |
|---|---|---|---|---|---|---|---|
| First indication way (universal set) | -75 dBm | -80 dBm | -84 dBm | -69 dBm | -71 dBm | -90 dBm | Not involved |
| Second indication way (maximum N = 3) | -75 dBm | / | / | -69 dBm | -71 dBm | / | Not involved |
| Third indication way (minimum N = 3) | / | -80 dBm | -84 dBm | / | / | -90 dBm | Not involved |

The intensity information of SL-PRS RSRP of the resource set is indicated in the first coordination information, using the indication method for intensity information of SL-PRS RSRP, which belongs to an indication method for information of SL-PRS RSRP of coordinated resources. The method may flexibly indicate the SL-PRS RSRP intensity signaling of each subchannel in the resource set, which reduces the probability of SL-PRS transmission failure caused by SL-PRS resource collision, and improves the success rate of SL-PRS transmission.

### Example 7: an indication method for bitmap information of SL-PRS RSRP based on SL-PRS resource set

Terminal A transmits the first coordination information to terminal B, where the first coordination information carries time-frequency resource indication information for at least one of the first resource set preferred by terminal B for SL-PRS or the second resource set not preferred by terminal B for SL-PRS; alternatively, the first coordination information carries the request information from terminal A to request terminal B to coordinate SL-PRS resources.

Alternatively, the first coordination information may also carry at least one piece of information of SL-PRS RSRP, threshold information of SL-PRS RSRP, priority information, and zone identifier information of at least one resource set from the first resource set and the second resource set.

In this example, the information of SL-PRS RSRP is indicated using bitmap information, where the bitmap information of SL-PRS RSRP refers to information of whether the SL-PRS RSRPs of multiple resources exceeds a threshold. If the SL-PRS RSRP of a resource exceeds a threshold, the corresponding bit of the resource is denoted as 1. If the SL-PRS RSRP of a resource does not exceed a threshold, the corresponding bit of the resource is denoted as 0. The bits of multiple resources form bitmap information. The indication method for bitmap information of SL-PRS RSRP of a resource set is as follows:
first indication method for bitmap information of SL-PRS RSRP: the first coordination information contains information of resources with SL-PRS RSRP intensity greater than or equal to a first threshold H in at least one resource set, and bitmap information of SL-PRS RSRP of the first threshold H.
second indication method for bitmap information of SL-PRS RSRP: the first coordination information contains information of resources with SL-PRS RSRP intensity lower than or equal to the first threshold H in at least one resource set, and the bitmap information of SL-PRS RSRP of the first threshold H.

The intensity information of SL-PRS RSRP of SL-PRS resources mentioned above refers to intensity information of SL-PRS RSRP of a subchannel or a subchannel set. The intensity information of SL-PRS RSRP of SL-PRS resources mentioned above refers to intensity information of SL-PRS RSRP of a subchannel or a subchannel set.

Table 2 is a comparison table of two indication ways for bitmap information of SL-PRS RSRP. As shown in Table 2, what is carried in the first coordination information transmitted from terminal A to terminal B is the second resource set, which is a resource set not preferred by terminal B for SL-PRS. The second resource set contains 6 subchannels, namely subchannel 1 to subchannel 6.

A first indication way indicates which subchannels among the 6 subchannels have SL-PRS RSRP intensities greater than or equal to the first threshold H (-80 dBm). For subchannels with SL-PRS RSRP intensities greater than or equal to the first threshold H, the indication information is "1", and for subchannels with SL-PRS RSRP intensities less than the first threshold H, the indication information is "0".

A second indication way indicates which subchannels have SL-PRS RSRP intensities lower than the first threshold H (-80 dBm) among the 6 subchannels. For subchannels with SL-PRS RSRP intensities lower than the first threshold H, the indication information is "1", and for subchannels with SL-PRS RSRP intensities greater than or equal to the first threshold H, the indication information is "0".

**Table 2 comparison table of two indication ways for bitmap information of SL-PRS RSRP**

| Way | Subc hann el 1 | Subch annel 2 | Subch annel 3 | Subch annel 4 | Subch annel 5 | Subch annel 6 | Given thresho ld |
|---|---|---|---|---|---|---|---|
| First indication way (greater than or equal to the first threshold H) | 1 | 1 | 0 | 1 | 1 | 0 | -80 dBm |
| Second indication way (less than the first threshold H) | 0 | 0 | 1 | 0 | 0 | 1 | -80 dBm |

The bitmap information of SL-PRS RSRP of the resource set is indicated in the first coordination information, using the indication method for bitmap information of SL-PRS RSRP, which belongs to an indication method for information of SL-PRS RSRP of coordinated resources. The method may flexibly indicate the bitmap signaling of SL-PRS RSRP of each subchannel in the resource set, which reduces the probability of SL-PRS transmission failure caused by SL-PRS resource collision, and improves the success rate of SL-PRS transmission. In addition, compared to the indication method for intensity information of SL-PRS RSRP, the signaling overhead of the indication method for bitmap information of SL-PRS RSRP is also significantly reduced.

### Example 8: a configuration method for the first threshold

Terminal A transmits the first coordination information to terminal B, where the first coordination information carries time-frequency resource indication information for at least one of the first resource set preferred by terminal B for SL-PRS or the second resource set not preferred by terminal B for SL-PRS; alternatively, the first coordination information carries the request information from terminal A to request terminal B to coordinate SL-PRS resources.

Alternatively, the first coordination information may also carry at least one piece of information of SL-PRS RSRP, threshold information of SL-PRS RSRP, priority information, and zone identifier information of at least one of the first resource set and the second resource set.

The first threshold is used to determine whether the information of SL-PRS RSRP of the resource is 1 or 0 in the bitmap of SL-PRS RSRP. The first threshold may be configured as follows:
first way: information of the first threshold is carried by the first coordination information;
second way: the information of the first threshold is configured by other signaling (such as RRC signaling); and
third way: the first threshold is pre-configured.

In addition, a value of the first threshold may also be obtained by querying a pre-configured table of relationship between the value of the first threshold and packet priority information.

The information of the first threshold is indicated, or the first threshold is pre-configured in the first coordination information or other signaling, using the above configuration method for the first threshold of the information of SL-PRS RSRP of the coordinated resources. The method may flexibly configure the first threshold, which reduces the probability of SL-PRS transmission failure caused by SL-PRS resource collision, and improves the success rate of SL-PRS transmission.

### Example 9: a carrier of the first coordination information

Terminal A transmits the first coordination information to terminal B, where the first coordination information carries time-frequency resource indication information for at least one of the first resource set preferred by terminal B for SL-PRS or the second resource set not preferred by terminal B for SL-PRS; alternatively, the first coordination information carries the request information from terminal A to request terminal B to coordinate SL-PRS resources.

Alternatively, the first coordination information may also carry at least one piece of information of SL-PRS RSRP, threshold information of SL-PRS RSRP, priority information, and zone identifier information of at least one of the first resource set and the second resource set.

The carrier of the first coordination information is described as follows:
the first coordination information may be carried by new SCI, such as SCI Format 2D;
the first coordination information may be carried by new DCI; and
the first coordination information may be carried by RRC signaling, including Uu RRC signaling or PC5 RRC signaling.

The first coordination information may also be carried by a mixture of the above multiple carriers, where the resource set in the first coordination information may be indicated by SCI, and the information of RSRP may be indicated by RRC signaling.

By using the transmission method of the first coordination information mentioned above, using SCI, DCI, RRC or a combination of these three carriers for the transmission of the first coordination information, the first coordination information may be flexibly transmitted, which reduces the probability of SL-PRS transmission failure caused by SL-PRS resource collision, and improves the success rate of SL-PRS transmission.

FIG. 7 is a second schematic flowchart of a method for resource coordination according to an embodiment of the present application. As shown in FIG. 7, the embodiments of the present application provide a method for resource coordination, which may be performed by a second terminal, such as a mobile phone, etc. The method includes:

Step 701: receiving first coordination information transmitted from a first terminal, where the first coordination information includes one or more types of the following information: type indication information of the first coordination information; first content indication information of the first coordination information; second content indication information of the first coordination information; a first resource set; a second resource set; a third resource set; a fourth resource set; indication information of a resource set occupied by a sidelink positioning reference signal (SL-PRS); information of sidelink positioning reference signal (SL-PRS) reference signal received power (RSRP); priority information; or zone identifier information.

In an embodiment, the method for resource coordination provided in this embodiment of the present application may refer to the embodiments of method for resource coordination performed by the first terminal, and may achieve the same technical effect. Therefore, the same parts and beneficial effects as the corresponding method embodiments in this embodiment are not repeated.

FIG. 8 is a schematic structural diagram of a first terminal according to an embodiment of the present application. As shown in FIG. 8, the terminal includes a memory 820, a transceiver 800, and a processor 810, where
the memory 820 is used for storing a computer program; the transceiver 800 is used for receiving and transmitting data under control of the processor 810; and the processor 810 is used for reading the computer program in the memory 820 and performing the following operations:
transmitting first coordination information to a second terminal, where the first coordination information includes one or more types of the following information:
type indication information of the first coordination information;
first content indication information of the first coordination information;
second content indication information of the first coordination information;
a first resource set;
a second resource set;
a third resource set;
a fourth resource set;
indication information of a resource set occupied by a sidelink positioning reference signal (SL-PRS);
information of sidelink positioning reference signal (SL-PRS) reference signal received power (RSRP);
priority information; or
zone identifier information.

In an embodiment, the transceiver 800 is used for receiving and transmitting data under control of the processor 810.

In FIG. 8, a bus architecture may include any number of interconnected buses and bridges, which are linked together through various circuits of one or more processors represented by the processor 810 and one or more memories represented by the memory 820. The bus architecture may also link together various other circuits, such as peripherals, voltage regulators, and power management circuits, etc., which are well known in the art, and therefore are not further described in the present application. The bus interface provides an interface. The transceiver 800 may include multiple elements, i.e., including a transmitter and a receiver, units for providing communication with various other devices over transmission media including wireless channels, wired channels, fiber optic cables, and the like. For different user equipment, a user interface 830 may be an interface capable of externally or internally connecting the required equipment, and the connected equipment includes, but not limited to, a small keypad, a display, a speaker, a microphone, a joystick, and the like.

The processor 810 is responsible for managing the bus architecture and usual processing, while the memory 820 may store the data used by the processor 810 in case of performing operations.

In some embodiments, the processor 810 may be a central processing unit (CPU), an application specific integrated circuit (ASIC), a field-programmable gate array (FPGA), or a complex programmable logic device (CPLD), the processor may also use a multi-core architecture.

The processor calls the computer program stored in the memory to perform any of the methods provided by the embodiments of the present application according to the obtained executable instructions. The processor and the memory may also be arranged physically separated.

In some embodiments, a value of the type indication information is a first value, indicating that the first terminal provides coordination information to the second terminal; or
a value of the type indication information is a second value, indicating that the first terminal requests coordination information from the second terminal.

In some embodiments, a value of the first content indication information is a first value, indicating that the first terminal provides the first resource set to the second terminal, where the first resource set includes a resource preferred by the second terminal for transmitting or receiving SL-PRS; or
a value of the first content indication information is a second value, indicating that the first terminal provides the second resource set to the second terminal, where the second resource set includes a resource not preferred by the second terminal for transmitting or receiving SL-PRS.

In some embodiments, the first resource set or the second resource set includes one or more types of the following information:
a slot set of an SL-PRS resource;
a subchannel set of an SL-PRS resource;
a resource reservation cycle of SL-PRS;
a resource reservation cycle list of SL-PRS;
a reference slot location of an SL-PRS resource; or
a resource combination corresponding to SL-PRS resource.

In some embodiments, the reference slot location of SL-PRS resource is a reference slot location used in case of determining an absolute slot location of the slot set of SL-PRS resource in a direct frame number (DFN).

In some embodiments, the reference slot location of SL-PRS resource is indicated by one or more types of the following indexes:
a DFN index; or
a slot index within a direct frame.

In some embodiments, the resource combination corresponding to SL-PRS resource includes one or more types of the following information:
a time resource indication index;
a frequency resource indication index; or
a resource reservation cycle.

In some embodiments, a value of the second content indication information is a first value, indicating that the first terminal requests a third resource set from the second terminal, where the third resource set includes a resource preferred by the first terminal for transmitting or receiving SL-PRS; or
a value of the second content indication information is a second value, indicating that the first terminal requests a fourth resource set from the second terminal, where the fourth resource set includes a resource not preferred by the first terminal for transmitting or receiving SL-PRS.

In some embodiments, the third resource set or the fourth resource set includes one or more types of the following information:
a quantity of subchannels occupied by SL-PRS;
a resource reservation cycle of SL-PRS;
a resource reservation cycle list of SL-PRS;
a location of a resource selection window of SL-PRS; or
a location of a subchannel selection window of SL-PRS.

In some embodiments, the information of SL-PRS RSRP includes one or more types of the following information:
information of SL-PRS RSRP of at least one resource in at least one resource set; or
information of SL-PRS RSRPs of resources meeting a given condition in at least one resource set.

In some embodiments, the information of SL-PRS RSRP includes one or more types of the following information:
intensity information of SL-PRS RSRP; or
bitmap information of SL-PRS RSRP, where the bitmap information is used to indicate whether multiple SL-PRS RSRPs exceed a target threshold.

In some embodiments, the intensity information of SL-PRS RSRP is intensity information of SL-PRS RSRP of a subchannel or a subchannel set.

In some embodiments, the information of SL-PRS RSRPs of resources meeting the given condition in at least one resource set includes one or more types of the following information:
intensity information of SL-PRS RSRPs of top N resources after ordering SL-PRS RSRP intensities from high to low in at least one resource set;
intensity information of SL-PRS RSRPs of top M resources after ordering SL-PRS RSRP intensities from low to high in at least one resource set;
bitmap information of SL-PRS RSRPs of resources with SL-PRS RSRP intensities greater than a target threshold in at least one resource set;
bitmap information of SL-PRS RSRPs of resources with SL-PRS RSRP intensities equal to a target threshold in at least one resource set;
bitmap information of SL-PRS RSRPs of resources with SL-PRS RSRP intensities lower than a target threshold in at least one resource set; or
bitmap information of SL-PRS RSRPs of resources with SL-PRS RSRP intensities equal to a target threshold in at least one resource set.

In some embodiments, the at least one resource set includes one or more types of the following sets:
the first resource set, where the first resource set includes a resource preferred by the second terminal for transmitting or receiving SL-PRS;
the second resource set, where the second resource set includes a resource not preferred by the second terminal for transmitting or receiving SL-PRS;
the third resource set, where the third resource set includes a resource preferred by the first terminal for transmitting or receiving SL-PRS; or
the fourth resource set, where the fourth resource set includes a resource not preferred by the first terminal for transmitting or receiving SL-PRS

In some embodiments, the target threshold is indicated in one or more of the following ways:
the target threshold being carried through the first coordination information;
the target threshold being configured through dedicated signaling;
the target threshold being pre-configured; or
the target threshold being determined based on a correspondence between a priority of the first coordination information and a threshold.

In some embodiments, the first coordination information is carried by one or more of the following messages:
sidelink control information (SCI);
downlink control information (DCI); or
radio resource control (RRC) signaling.

It should be noted that the first terminal provided in the embodiments of the present application is capable of performing all the method steps implemented by the method embodiment performed by the first terminal, and may achieve the same technical effects. Therefore, specific descriptions of the same parts and beneficial effects as the method embodiment in this embodiment are not repeated here.

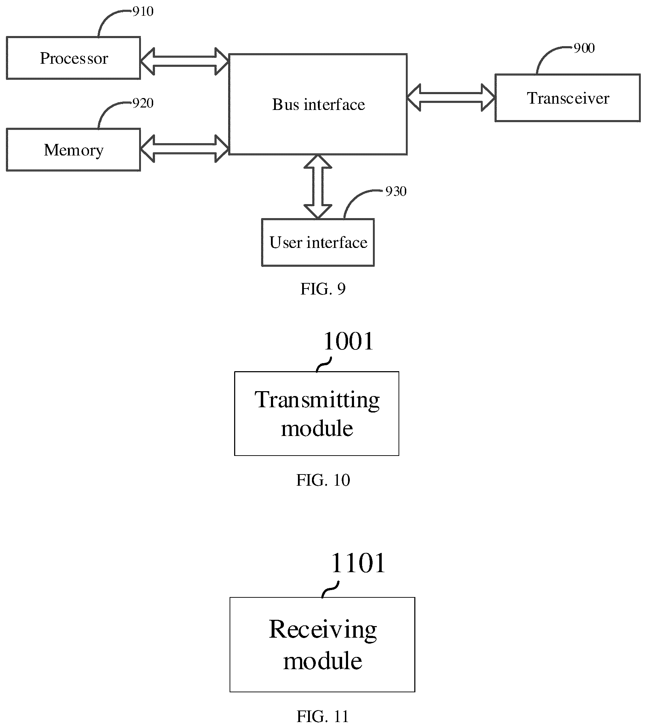

FIG. 9 is a schematic structural diagram of a second terminal according to an embodiment of the present application. As shown in FIG. 9, the terminal includes a memory 920, a transceiver 900, and a processor 910, where
the memory 920 is used for storing a computer program; the transceiver 900 is used for receiving and transmitting data under control of the processor 910; and the processor 910 is used for reading the computer program in the memory 920 and performing the following operations:
receiving first coordination information transmitted from a first terminal, where the first coordination information includes one or more types of the following information:
type indication information of the first coordination information;
first content indication information of the first coordination information;
second content indication information of the first coordination information;
a first resource set;
a second resource set;
a third resource set;
a fourth resource set;
indication information of a resource set occupied by a sidelink positioning reference signal (SL-PRS);
information of sidelink positioning reference signal (SL-PRS) reference signal received power (RSRP);
priority information; or
zone identifier information.

In an embodiment, the transceiver 900 is used for receiving and transmitting data under control of the processor 910.

In FIG. 9, a bus architecture may include any number of interconnected buses and bridges, which are linked together through various circuits of one or more processors represented by the processor 910 and one or more memories represented by the memory 920. The bus architecture may also link together various other circuits, such as peripherals, voltage regulators, and power management circuits, etc., which are well known in the art, and therefore are not further described in the present application. The bus interface provides an interface. The transceiver 900 may include multiple elements, i.e., including a transmitter and a receiver, units for providing communication with various other devices over transmission media including wireless channels, wired channels, fiber optic cables, and the like. For different user equipment, a user interface 930 may be an interface capable of externally or internally connecting the required equipment, and the connected equipment includes, but not limited to, a small keypad, a display, a speaker, a microphone, a joystick, and the like.

The processor 910 is responsible for managing the bus architecture and usual processing, while the memory 920 may store the data used by the processor 910 in case of performing operations.

In some embodiments, the processor 910 may be a central processing unit (CPU), an application specific integrated circuit (ASIC), a field-programmable gate array (FPGA), or a complex programmable logic device (CPLD), the processor may also use a multi-core architecture.

The processor calls the computer program stored in the memory to perform any of the methods provided by the embodiments of the present application according to the obtained executable instructions. The processor and the memory may also be arranged physically separated.

It should be noted that the second terminal provided in the embodiments of the present application is capable of performing all the method steps implemented by the method embodiment performed by the second terminal, and may achieve the same technical effects. Therefore, specific descriptions of the same parts and beneficial effects as the method embodiment in this embodiment are not repeated here.

FIG. 10 is a first schematic structural diagram of an apparatus for resource coordination according to an embodiment of the present application. As shown in FIG. 10, the embodiments of the present application provide an apparatus for resource coordination, including a transmitting module 1001, where
the transmitting module 1001 is used for transmitting first coordination information to a second terminal, where the first coordination information includes one or more types of the following information:
type indication information of the first coordination information;
first content indication information of the first coordination information;
second content indication information of the first coordination information;
a first resource set;
a second resource set;
a third resource set;
a fourth resource set;
indication information of a resource set occupied by a sidelink positioning reference signal (SL-PRS);
information of sidelink positioning reference signal (SL-PRS) reference signal received power (RSRP);
priority information; or
zone identifier information.

In some embodiments, a value of the type indication information is a first value, indicating that the first terminal provides coordination information to the second terminal; or
a value of the type indication information is a second value, indicating that the first terminal requests coordination information from the second terminal.

In some embodiments, a value of the first content indication information is a first value, indicating that the first terminal provides the first resource set to the second terminal, where the first resource set includes a resource preferred by the second terminal for transmitting or receiving SL-PRS; or
a value of the first content indication information is a second value, indicating that the first terminal provides the second resource set to the second terminal, where the second resource set includes a resource not preferred by the second terminal for transmitting or receiving SL-PRS.

In some embodiments, the first resource set or the second resource set includes one or more types of the following information:
a slot set of an SL-PRS resource;
a subchannel set of an SL-PRS resource;
a resource reservation cycle of SL-PRS;
a resource reservation cycle list of SL-PRS;
a reference slot location of an SL-PRS resource; or
a resource combination corresponding to SL-PRS resource.

In some embodiments, the reference slot location of SL-PRS resource is a reference slot location used in case of determining an absolute slot location of the slot set of SL-PRS resource in a direct frame number (DFN).

In some embodiments, the reference slot location of SL-PRS resource is indicated by one or more types of the following indexes:
a DFN index; or
a slot index within a direct frame.

In some embodiments, the resource combination corresponding to SL-PRS resource includes one or more types of the following information:
a time resource indication index;
a frequency resource indication index; or
a resource reservation cycle.

In some embodiments, a value of the second content indication information is a first value, indicating that the first terminal requests a third resource set from the second terminal, where the third resource set includes a resource preferred by the first terminal for transmitting or receiving SL-PRS; or
a value of the second content indication information is a second value, indicating that the first terminal requests a fourth resource set from the second terminal, where the fourth resource set includes a resource not preferred by the first terminal for transmitting or receiving SL-PRS.

In some embodiments, the third resource set or the fourth resource set includes one or more types of the following information:
a quantity of subchannels occupied by SL-PRS;
a resource reservation cycle of SL-PRS;
a resource reservation cycle list of SL-PRS;
a location of a resource selection window of SL-PRS; or
a location of a subchannel selection window of SL-PRS.

In some embodiments, the information of SL-PRS RSRP includes one or more types of the following information:
information of SL-PRS RSRP of at least one resource in at least one resource set; or
information of SL-PRS RSRPs of resources meeting a given condition in at least one resource set.

In some embodiments, the information of SL-PRS RSRP includes one or more types of the following information:
intensity information of SL-PRS RSRP; or
bitmap information of SL-PRS RSRP, where the bitmap information is used to indicate whether multiple SL-PRS RSRPs exceed a target threshold.

In some embodiments, the intensity information of SL-PRS RSRP is intensity information of SL-PRS RSRP of a subchannel or a subchannel set.

In some embodiments, the information of SL-PRS RSRPs of resources meeting the given condition in at least one resource set includes one or more types of the following information:
intensity information of SL-PRS RSRPs of top N resources after ordering SL-PRS RSRP intensities from high to low in at least one resource set;
intensity information of SL-PRS RSRPs of top M resources after ordering SL-PRS RSRP intensities from low to high in at least one resource set;
bitmap information of SL-PRS RSRPs of resources with SL-PRS RSRP intensities greater than a target threshold in at least one resource set;
bitmap information of SL-PRS RSRPs of resources with SL-PRS RSRP intensities equal to a target threshold in at least one resource set;
bitmap information of SL-PRS RSRPs of resources with SL-PRS RSRP intensities lower than a target threshold in at least one resource set; or
bitmap information of SL-PRS RSRPs of resources with SL-PRS RSRP intensities equal to a target threshold in at least one resource set.

In some embodiments, the at least one resource set includes one or more types of the following sets:
the first resource set, where the first resource set includes a resource preferred by the second terminal for transmitting or receiving SL-PRS;
the second resource set, where the second resource set includes a resource not preferred by the second terminal for transmitting or receiving SL-PRS;
the third resource set, where the third resource set includes a resource preferred by the first terminal for transmitting or receiving SL-PRS; or
the fourth resource set, where the fourth resource set includes a resource not preferred by the first terminal for transmitting or receiving SL-PRS

In some embodiments, the target threshold is indicated in one or more of the following ways:
the target threshold being carried through the first coordination information;
the target threshold being configured through dedicated signaling;
the target threshold being pre-configured; or
the target threshold being determined based on a correspondence between a priority of the first coordination information and a threshold.

In some embodiments, the first coordination information is carried by one or more of the following messages:
sidelink control information (SCI);
downlink control information (DCI); or
radio resource control (RRC) signaling.

In an embodiment, the apparatus for resource coordination provided in the embodiments of the present application may achieve all method steps implemented by the method embodiment performed by the first terminal, and may achieve the same technical effects. Therefore, the same parts and beneficial effects as the method embodiment in this embodiment are not repeated.

FIG. 11 is a second schematic structural diagram of an apparatus for resource coordination according to an embodiment of the present application. As shown in FIG. 11, the embodiments of the present application provide an apparatus for resource coordination, including a receiving module 1101, where
the transmitting module 1101 is used for receiving first coordination information transmitted from a first terminal, where the first coordination information includes one or more types of the following information:
type indication information of the first coordination information;
first content indication information of the first coordination information;
second content indication information of the first coordination information;
a first resource set;
a second resource set;
a third resource set;
a fourth resource set;
indication information of a resource set occupied by a sidelink positioning reference signal (SL-PRS);
information of sidelink positioning reference signal (SL-PRS) reference signal received power (RSRP);
priority information; or
zone identifier information.

In an embodiment, the apparatus for resource coordination provided in the embodiments of the present application may achieve all method steps implemented by the method embodiment performed by the second terminal, and may achieve the same technical effects. Therefore, the same parts and beneficial effects as the method embodiment in this embodiment are not repeated.

It should be noted that, the division of units/modules in the embodiments of the present application is schematic, and is only a logical function division, and there may be other division ways in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes, such as a USB flash disk, a mobile hard disk, a read-only memory (ROM), a random access memory (RAM), a magnetic disk, or a compact disk.

In some embodiments, a computer-readable storage medium is also provided, where the computer-readable storage medium stores a computer program for causing a computer to perform the method for resource coordination provided by the above method embodiments.

In an embodiment, the computer-readable storage medium provided in the embodiments of the present application may implement all the method steps implemented in the above method embodiments and achieve the same technical effects. Therefore, the same parts and beneficial effects as the method embodiments in this embodiment are not repeated.

It should be noted that the processor-readable storage medium may be any available medium or data storage device that may be accessed by the processor, including but not limited to, a magnetic storage (e.g., a floppy disk, a hard disk, a magnetic tape, a magneto-optical disk (MO), etc.), an optical memory (such as CD, DVD, BD, HVD, etc.), and a semiconductor memory (such as ROM, EPROM, EEPROM, a non-volatile memory (NAND FLASH), a solid-state drive (SSD)), etc.

Additionally, it should be noted that the terms "first", "second", etc. in the embodiments of the present application are used to distinguish similar objects and are not used to describe a specific order or sequence. It should be understood that the terms used in this way may be interchanged in appropriate circumstances, and the embodiments of the present application may be implemented in order other than those illustrated or described herein, and the objects distinguished by "first" and "second" are usually of the same class, without limiting a quantity of objects. For example, the first object may be one or multiple.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions according to the embodiments of the present application may be applicable to various systems, especially 5G systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device, and may further include a core network part, such as an evolved packet system (EPS), a 5G system (5GS), and the like.

The terminal in the embodiments of the present application may be a device that provides voice and/or data connectivity to a user, a handheld device with a wireless connection function, or other processing devices connected to a wireless modem. In different systems, the names of the terminal may be different. For example, in the 5G system, the terminal may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote UE, an access terminal, a user terminal, a user agent, or a user device, which is not limited in the embodiments of the present application.

The network device in the embodiments of the present application may be a base station, and the base station may include multiple cells providing services for a terminal. Depending on the specific scenario, the base station may be called an access point, or a device communicating with a wireless terminal device through one or more sectors on the air interface in the access network, or other names. The network device may be used for exchanging received air frames with Internet Protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

The phrase "determine B based on A" in the present application means that the factor A should be considered when determining B. Not limited to "determining B based solely on A", it should also include: "determine B based on A and C", "determine B based on A, C, and E", "determine C based on A, and further determine B based on C", etc. In addition, it may also include using A as a condition for determining B, for example, "in case that A satisfies the first condition, use the first method to determine B"; for example, "in case that A satisfies the second condition, determine B" and so on; for example, "in case that A satisfies the third condition, determine B based on the first parameter", etc. A may also be used as a condition for determining B, such as "in case that A satisfies the first condition, use the first method to determine C, and further determine B based on C", etc.

Multi-input multi-output (MIMO) transmission may be performed between the network device and the terminal device using one or more antennas and the MIMO transmission may be single user MIMO (SU-MIMO) or multiple user MIMO (MU-MIMO). According to the form and quantity of antenna combinations, MIMO transmission may be 2D-MIMO, 3D-MIMO, FD-MIMO, or massive-MIMO, and may also be diversity transmission, precoding transmission, or beamforming transmission.

As is appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein (including but not limited to disk storage, optical storage, and the like).

The present application is described with reference to flow charts and/or block diagrams of methods, devices (systems), and computer program products according to embodiments of the present application. It is understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular way, and the instructions stored in the processor-readable memory may result in a manufacture including instruction means, the instruction means can perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

To those skilled in the art, various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for resource coordination, performed by a first terminal, comprising:
transmitting first coordination information to a second terminal, wherein the first coordination information comprises one or more types of the following information:
type indication information of the first coordination information;
first content indication information of the first coordination information;
second content indication information of the first coordination information;
a first resource set;
a second resource set;
a third resource set;
a fourth resource set;
indication information of a resource set occupied by a sidelink positioning reference signal (SL-PRS);
information of sidelink positioning reference signal (SL-PRS) reference signal received power (RSRP);
priority information; or
zone identifier information.

2. The method of claim 1, wherein a value of the type indication information is a first value, indicating that the first terminal provides coordination information to the second terminal; or
a value of the type indication information is a second value, indicating that the first terminal requests coordination information from the second terminal.

3. The method of claim 1, wherein a value of the first content indication information is a first value, indicating that the first terminal provides the first resource set to the second terminal, wherein the first resource set comprises a resource preferred by the second terminal for transmitting or receiving SL-PRS; or
a value of the first content indication information is a second value, indicating that the first terminal provides the second resource set to the second terminal, wherein the second resource set comprises a resource not preferred by the second terminal for transmitting or receiving SL-PRS.

4. The method of claim 3, wherein the first resource set or the second resource set comprises one or more types of the following information:
a slot set of an SL-PRS resource;
a subchannel set of an SL-PRS resource;
a resource reservation cycle of SL-PRS;
a resource reservation cycle list of SL-PRS;
a reference slot location of an SL-PRS resource; or
a resource combination corresponding to SL-PRS resource.

5. The method of claim 4, wherein the reference slot location of SL-PRS resource is a reference slot location used in case of determining an absolute slot location of the slot set of SL-PRS resource in a direct frame number (DFN).

6. The method of claim 5, wherein the reference slot location of SL-PRS resource is indicated by one or more types of the following indexes:
a DFN index; or
a slot index within a direct frame.

7. The method of claim 4, wherein the resource combination corresponding to SL-PRS resource comprises one or more types of the following information:
a time resource indication index;
a frequency resource indication index; or
a resource reservation cycle.

8. The method of claim 1, wherein a value of the second content indication information is a first value, indicating that the first terminal requests a third resource set from the second terminal, wherein the third resource set comprises a resource preferred by the first terminal for transmitting or receiving SL-PRS; or
a value of the second content indication information is a second value, indicating that the first terminal requests a fourth resource set from the second terminal, wherein the fourth resource set comprises a resource not preferred by the first terminal for transmitting or receiving SL-PRS.

9. The method of claim 8, wherein the third resource set or the fourth resource set comprises one or more types of the following information:
a quantity of subchannels occupied by SL-PRS;
a resource reservation cycle of SL-PRS;
a resource reservation cycle list of SL-PRS;
a location of a resource selection window of SL-PRS; or
a location of a subchannel selection window of SL-PRS.

10. The method of claim 1, wherein the information of SL-PRS RSRP comprises one or more types of the following information:
information of SL-PRS RSRP of at least one resource in at least one resource set; or
information of SL-PRS RSRPs of resources meeting a pre-set condition in at least one resource set.

11. The method of claim 10, wherein the information of SL-PRS RSRP comprises one or more types of the following information:
intensity information of SL-PRS RSRP; or
bitmap information of SL-PRS RSRP, wherein the bitmap information is used to indicate whether multiple SL-PRS RSRPs exceed a target threshold.

12. The method of claim 11, wherein the intensity information of SL-PRS RSRP is intensity information of SL-PRS RSRP of a subchannel or a subchannel set.

13. The method of claim 10, wherein the information of SL-PRS RSRPs of resources meeting the given condition in at least one resource set comprises one or more types of the following information:
intensity information of SL-PRS RSRPs of top N resources after ordering SL-PRS RSRP intensities from high to low in at least one resource set;
intensity information of SL-PRS RSRPs of top M resources after ordering SL-PRS RSRP intensities from low to high in at least one resource set;
bitmap information of SL-PRS RSRPs of resources with SL-PRS RSRP intensities greater than a target threshold in at least one resource set;
bitmap information of SL-PRS RSRPs of resources with SL-PRS RSRP intensities equal to a target threshold in at least one resource set;
bitmap information of SL-PRS RSRPs of resources with SL-PRS RSRP intensities lower than a target threshold in at least one resource set; or
bitmap information of SL-PRS RSRPs of resources with SL-PRS RSRP intensities equal to a target threshold in at least one resource set.

14. The method of claim 13, wherein the at least one resource set comprises one or more types of the following sets:
the first resource set, wherein the first resource set comprises a resource preferred by the second terminal for transmitting or receiving SL-PRS;
the second resource set, wherein the second resource set comprises a resource not preferred by the second terminal for transmitting or receiving SL-PRS;
the third resource set, wherein the third resource set comprises a resource preferred by the first terminal for transmitting or receiving SL-PRS; or
the fourth resource set, wherein the fourth resource set comprises a resource not preferred by the first terminal for transmitting or receiving SL-PRS.

15. The method of claim 13, wherein the target threshold is indicated in one or more of the following ways:
the target threshold being carried through the first coordination information;
the target threshold being configured through dedicated signaling;
the target threshold being pre-configured; or
the target threshold being determined based on a correspondence between a priority of the first coordination information and a threshold.

16. The method for resource coordination of any of claims 1 to 15, wherein the first coordination information is carried by one or more of the following messages:
sidelink control information (SCI);
downlink control information (DCI); or
radio resource control (RRC) signaling.

17. A method for resource coordination, performed by a second terminal, comprising:
receiving first coordination information transmitted from a first terminal, wherein the first coordination information comprises one or more types of the following information:
type indication information of the first coordination information;
first content indication information of the first coordination information;
second content indication information of the first coordination information;
a first resource set;
a second resource set;
a third resource set;
a fourth resource set;
indication information of a resource set occupied by a sidelink positioning reference signal (SL-PRS);
information of sidelink positioning reference signal (SL-PRS) reference signal received power (RSRP);
priority information; or
zone identifier information.

18. A first terminal, comprising a memory, a transceiver, and a processor, wherein
the memory is used for storing a computer program; the transceiver is used for receiving and transmitting data under control of the processor; and the processor is used for reading the computer program in the memory and performing the following operations:
transmitting first coordination information to a second terminal, wherein the first coordination information comprises one or more types of the following information:
type indication information of the first coordination information;
first content indication information of the first coordination information;
second content indication information of the first coordination information;
a first resource set;
a second resource set;
a third resource set;
a fourth resource set;
indication information of a resource set occupied by a sidelink positioning reference signal (SL-PRS);
information of sidelink positioning reference signal (SL-PRS) reference signal received power (RSRP);
priority information; or
zone identifier information.

19. The first terminal of claim 18, wherein a value of the type indication information is a first value, indicating that the first terminal provides coordination information to the second terminal; or
a value of the type indication information is a second value, indicating that the first terminal requests coordination information from the second terminal.

20. The first terminal of claim 18, wherein a value of the first content indication information is a first value, indicating that the first terminal provides the first resource set to the second terminal, wherein the first resource set comprises a resource preferred by the second terminal for transmitting or receiving SL-PRS; or
a value of the first content indication information is a second value, indicating that the first terminal provides the second resource set to the second terminal, wherein the second resource set comprises a resource not preferred by the second terminal for transmitting or receiving SL-PRS.

21. The first terminal of claim 20, wherein the first resource set or the second resource set comprises one or more types of the following information:
a slot set of an SL-PRS resource;
a subchannel set of an SL-PRS resource;
a resource reservation cycle of SL-PRS;
a resource reservation cycle list of SL-PRS;
a reference slot location of an SL-PRS resource; or
a resource combination corresponding to SL-PRS resource.

22. The first terminal of claim 21, wherein the reference slot location of SL-PRS resource is a reference slot location used in case of determining an absolute slot location of the slot set of SL-PRS resource in a direct frame number (DFN).

23. The first terminal of claim 22, wherein the reference slot location of SL-PRS resource is indicated by one or more types of the following indexes:
a DFN index; or
a slot index within a direct frame.

24. The first terminal of claim 21, wherein the resource combination corresponding to SL-PRS resource comprises one or more types of the following information:
a time resource indication index;
a frequency resource indication index; or
a resource reservation cycle.

25. The first terminal of claim 18, wherein a value of the second content indication information is a first value, indicating that the first terminal requests a third resource set from the second terminal, wherein the third resource set comprises a resource preferred by the first terminal for transmitting or receiving SL-PRS; or
a value of the second content indication information is a second value, indicating that the first terminal requests a fourth resource set from the second terminal, wherein the fourth resource set comprises a resource not preferred by the first terminal for transmitting or receiving SL-PRS.

26. The first terminal of claim 25, wherein the third resource set or the fourth resource set comprises one or more types of the following information:
a quantity of subchannels occupied by SL-PRS;
a resource reservation cycle of SL-PRS;
a resource reservation cycle list of SL-PRS;
a location of a resource selection window of SL-PRS; or
a location of a subchannel selection window of SL-PRS.

27. The first terminal of claim 18, wherein the information of SL-PRS RSRP comprises one or more types of the following information:
information of SL-PRS RSRP of at least one resource in at least one resource set; or
information of SL-PRS RSRPs of resources meeting a given condition in at least one resource set.

28. The first terminal of claim 27, wherein the information of SL-PRS RSRP comprises one or more types of the following information:
intensity information of SL-PRS RSRP; or
bitmap information of SL-PRS RSRP, wherein the bitmap information is used to indicate whether multiple SL-PRS RSRPs exceed a target threshold.

29. The first terminal of claim 28, wherein the intensity information of SL-PRS RSRP is intensity information of SL-PRS RSRP of a subchannel or a subchannel set.

30. The first terminal of claim 28, wherein the information of SL-PRS RSRPs of resources meeting the given condition in at least one resource set comprises one or more types of the following information:
intensity information of SL-PRS RSRPs of top N resources after ordering SL-PRS RSRP intensities from high to low in at least one resource set;
intensity information of SL-PRS RSRPs of top M resources after ordering SL-PRS RSRP intensities from low to high in at least one resource set;
bitmap information of SL-PRS RSRPs of resources with SL-PRS RSRP intensities greater than the target threshold in at least one resource set;
bitmap information of SL-PRS RSRPs of resources with SL-PRS RSRP intensities equal to the target threshold in at least one resource set;
bitmap information of SL-PRS RSRPs of resources with SL-PRS RSRP intensities lower than the target threshold in at least one resource set; or
bitmap information of SL-PRS RSRPs of resources with SL-PRS RSRP intensities equal to the target threshold in at least one resource set.

31. The first terminal of claim 30, wherein the at least one resource set comprises one or more of the following sets:
the first resource set, wherein the first resource set comprises a resource preferred by the second terminal for transmitting or receiving SL-PRS;
the second resource set, wherein the second resource set comprises a resource not preferred by the second terminal for transmitting or receiving SL-PRS;
the third resource set, wherein the third resource set comprises a resource preferred by the first terminal for transmitting or receiving SL-PRS; or
the fourth resource set, wherein the fourth resource set comprises a resource not preferred by the first terminal for transmitting or receiving SL-PRS.

32. The first terminal of claim 30, wherein the target threshold is indicated in one or more of the following ways:
the target threshold being carried through the first coordination information;
the target threshold being configured through dedicated signaling;
the target threshold being pre-configured; or
the target threshold being determined based on a correspondence between a priority of the first coordination information and a threshold.

33. The first terminal of any of claims 18 to 32, wherein the first coordination information is carried by one or more of the following messages:
sidelink control information (SCI);
downlink control information (DCI); or
radio resource control (RRC) signaling.

34. A second terminal, comprising a memory, a transceiver, and a processor, wherein
the memory is used for storing a computer program; the transceiver is used for receiving and transmitting data under control of the processor; and the processor is used for reading the computer program in the memory and performing the following operation:
receiving first coordination information transmitted from a first terminal, wherein the first coordination information comprises one or more types of the following information:
type indication information of the first coordination information;
first content indication information of the first coordination information;
second content indication information of the first coordination information;
a first resource set;
a second resource set;
a third resource set;
a fourth resource set;
indication information of a resource set occupied by a sidelink positioning reference signal (SL-PRS);
information of sidelink positioning reference signal (SL-PRS) reference signal received power (RSRP);
priority information; or
zone identifier information.

35. An apparatus for resource coordination, comprising a transmitting module, wherein
the transmitting module is used for transmitting first coordination information to a second terminal, wherein the first coordination information comprises one or more types of the following information:
type indication information of the first coordination information;
first content indication information of the first coordination information;
second content indication information of the first coordination information;
a first resource set;
a second resource set;
a third resource set;
a fourth resource set;
indication information of a resource set occupied by a sidelink positioning reference signal (SL-PRS);
information of sidelink positioning reference signal (SL-PRS) reference signal received power (RSRP);
priority information; or
zone identifier information.

36. The apparatus for resource coordination of claim 35, wherein a value of the type indication information is a first value, indicating that the first terminal provides coordination information to the second terminal; or
a value of the type indication information is a second value, indicating that the first terminal requests coordination information from the second terminal.

37. The apparatus for resource coordination of claim 35, wherein a value of the first content indication information is a first value, indicating that the first terminal provides the first resource set to the second terminal, wherein the first resource set comprises a resource preferred by the second terminal for transmitting or receiving SL-PRS; or
a value of the first content indication information is a second value, indicating that the first terminal provides the second resource set to the second terminal, wherein the second resource set comprises a resource not preferred by the second terminal for transmitting or receiving SL-PRS.

38. The apparatus for resource coordination of claim 37, wherein the first resource set or the second resource set comprises one or more types of the following information:
a slot set of an SL-PRS resource;
a subchannel set of an SL-PRS resource;
a resource reservation cycle of SL-PRS;
a resource reservation cycle list of SL-PRS;
a reference slot location of an SL-PRS resource; or
a resource combination corresponding to SL-PRS resource.

39. The apparatus for resource coordination of claim 38, wherein the reference slot location of SL-PRS resource is a reference slot location used in case of determining an absolute slot location of the slot set of SL-PRS resource in a direct frame number (DFN).

40. The apparatus for resource coordination of claim 39, wherein the reference slot location of SL-PRS resource is indicated by one or more types of the following indexes:
a DFN index; or
a slot index within a direct frame.

41. The apparatus for resource coordination of claim 38, wherein the resource combination corresponding to SL-PRS resource comprises one or more types of the following information:
a time resource indication index;
a frequency resource indication index; or
a resource reservation cycle.

42. The apparatus for resource coordination of claim 35, wherein a value of the second content indication information is a first value, indicating that the first terminal requests a third resource set from the second terminal, wherein the third resource set comprises a resource preferred by the first terminal for transmitting or receiving SL-PRS; or
a value of the second content indication information is a second value, indicating that the first terminal requests a fourth resource set from the second terminal, wherein the fourth resource set comprises a resource not preferred by the first terminal for transmitting or receiving SL-PRS.

43. The apparatus for resource coordination of claim 42, wherein the third resource set or the fourth resource set comprises one or more types of the following information:
a quantity of subchannels occupied by SL-PRS;
a resource reservation cycle of SL-PRS;
a resource reservation cycle list of SL-PRS;
a location of a resource selection window of SL-PRS; or
a location of a subchannel selection window of SL-PRS.

44. The apparatus for resource coordination of claim 35, wherein the information of SL-PRS RSRP comprises one or more types of the following information:
information of SL-PRS RSRP of at least one resource in at least one resource set; or
information of SL-PRS RSRPs of resources meeting a given condition in at least one resource set.

45. The apparatus for resource coordination of claim 44, wherein the information of SL-PRS RSRP comprises one or more types of the following information:
intensity information of SL-PRS RSRP; or
bitmap information of SL-PRS RSRP, wherein the bitmap information is used to indicate whether multiple SL-PRS RSRPs exceed a target threshold.

46. The apparatus for resource coordination of claim 45, wherein the intensity information of SL-PRS RSRP is intensity information of SL-PRS RSRP of a subchannel or a subchannel set.

47. The apparatus for resource coordination of claim 44, wherein the information of SL-PRS RSRPs of resources meeting the given condition in at least one resource set comprises one or more types of the following information:
intensity information of SL-PRS RSRPs of top N resources after ordering SL-PRS RSRP intensities from high to low in at least one resource set;
intensity information of SL-PRS RSRPs of top M resources after ordering SL-PRS RSRP intensities from low to high in at least one resource set;
bitmap information of SL-PRS RSRPs of resources with SL-PRS RSRP intensities greater than a target threshold in at least one resource set;
bitmap information of SL-PRS RSRPs of resources with SL-PRS RSRP intensities equal to a target threshold in at least one resource set;
bitmap information of SL-PRS RSRPs of resources with SL-PRS RSRP intensities lower than a target threshold in at least one resource set; or
bitmap information of SL-PRS RSRPs of resources with SL-PRS RSRP intensities equal to a target threshold in at least one resource set.

48. The apparatus for resource coordination of claim 47, wherein the at least one resource set comprises one or more types of the following sets:
the first resource set, wherein the first resource set comprises a resource preferred by the second terminal for transmitting or receiving SL-PRS;
the second resource set, wherein the second resource set comprises a resource not preferred by the second terminal for transmitting or receiving SL-PRS;
the third resource set, wherein the third resource set comprises a resource preferred by the first terminal for transmitting or receiving SL-PRS; or
the fourth resource set, wherein the fourth resource set comprises a resource not preferred by the first terminal for transmitting or receiving SL-PRS.

49. The apparatus for resource coordination of claim 47, wherein the target threshold is indicated in one or more of the following ways:
the target threshold being carried through the first coordination information;
the target threshold being configured through dedicated signaling;
the target threshold being pre-configured; or
the target threshold being determined based on a correspondence between a priority of the first coordination information and a threshold.

50. The apparatus for resource coordination of any of claims 35 to 49, wherein the first coordination information is carried by one or more of the following messages:
sidelink control information (SCI);
downlink control information (DCI); or
radio resource control (RRC) signaling.

51. An apparatus for resource coordination, comprising a receiving module, wherein
the receiving module is used for receiving first coordination information transmitted from a first terminal, wherein the first coordination information comprises one or more types of the following information:
type indication information of the first coordination information;
first content indication information of the first coordination information;
second content indication information of the first coordination information;
a first resource set;
a second resource set;
a third resource set;
a fourth resource set;
indication information of a resource set occupied by a sidelink positioning reference signal (SL-PRS);
information of sidelink positioning reference signal (SL-PRS) reference signal received power (RSRP);
priority information; or
zone identifier information.

52. A computer-readable storage medium, wherein the computer-readable storage medium storing a computer program used for causing a computer to perform the method for resource coordination of any of claims 1 to 17.
